(19) **Europäisches Patentamt / European Patent Office / Office européen des brevets**

(11) **EP 4 598 203 A1**

(12) **EUROPEAN PATENT APPLICATION**
published in accordance with Art. 153(4) EPC

(43) Date of publication:
06.08.2025  Bulletin 2025/32

(21) Application number: 23878886.3

(22) Date of filing: 15.09.2023

(51) International Patent Classification (IPC):
**H04W 72/1263** $^{(2023.01)}$

(52) Cooperative Patent Classification (CPC):
**H04B 1/7163; H04W 72/1263**

(86) International application number:
**PCT/CN2023/119097**

(87) International publication number:
**WO 2024/082892 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022  CN 202211275258**

(71) Applicant: **Huawei Technologies Co., Ltd.
Shenzhen, Guangdong 518129 (CN)**

(72) Inventors:
• WU, Kuan
  Shenzhen, Guangdong 518129 (CN)
• HUANG, Lei
  Shenzhen, Guangdong 518129 (CN)
• QIAN, Bin
  Shenzhen, Guangdong 518129 (CN)
• YANG, Xun
  Shenzhen, Guangdong 518129 (CN)

(74) Representative: **Körber, Martin Hans
Mitscherlich PartmbB
Patent- und Rechtsanwälte
Karlstraße 7
80333 München (DE)**

(54) **SCHEDULING METHOD FOR UWB AND RELATED PRODUCT**

(57)    This application discloses a scheduling method for a UWB and a related product. This application may be applied to a UWB-based wireless personal area network system, a sensing system, a positioning system, a ranging system, or a communication system, and may be further applied to a wireless local area network system that supports 802.11 series protocols such as a next-generation Wi-Fi protocol of IEEE802.11ax, for example, Wi-Fi 7, and a next-generation protocol of 802.11be, for example, Wi-Fi 8. The method includes: generating scheduling information, where the scheduling information includes a time unit bitmap and a bitmap offset, the time unit bitmap indicates whether a time unit is used by a UWB device to transmit a UWB signal, the bitmap offset is used to determine a start time unit in which the UWB device transmits the UWB signal, and a time unit corresponding to a $1^{st}$ bit of the time unit bitmap is the start time unit; and sending the scheduling information. A length of the bitmap is reduced, so that signaling overheads can be reduced.

FIG. 6

**Description**

This application claims priority to Chinese Patent Application No. 202211275258.3, filed with the China National Intellectual Property Administration on October 18, 2022 and entitled "SCHEDULING METHOD FOR UWB AND RELATED PRODUCT", which is incorporated herein by reference in its entirety.

**TECHNICAL FIELD**

This application relates to the communication field, and in particular, to a scheduling method for a UWB and a related product.

**BACKGROUND**

An ultra-wideband (ultra-wideband, UWB) technology is a wireless communication and sensing/ranging technology that transmits a signal by using a nanosecond-level non-sine narrow impulse, and therefore occupies a wide spectral range. Because of its narrow impulse and extremely low radiation spectral density, a UWB system has advantages such as a strong multipath resolution capability, low power consumption, and high confidentiality, and has attracted wide attention in the industry.

Since the Federal Communications Commission approved entry of the UWB technology into the civil field in 2002, many world-renowned large companies, research institutes, and standardization organizations have been actively engaged in research, development, and standardization of ultra-wideband wireless communication technologies. The Institute of Electrical and Electronics Engineers (Institute of Electrical and Electronics Engineers, IEEE) has incorporated the UWB technology into IEEE 802 series wireless standards, and has released a UWB technology-based wireless personal area network (wireless personal area network, WPAN) standard IEEE 802.15.4a and an evolved version IEEE 802.15.4z of the standard IEEE 802.15.4a. Currently, formulation of a next-generation UWB WPAN standard IEEE 802.15.4ab is put on the agenda. A UWB is planned to be comprehensively upgraded in the IEEE 802.15.4ab standard.

A scheduling information element (information element, IE) for UWB applications (such as ranging, sensing, positioning, and communication) is used to schedule one or more UWB devices to implement the UWB applications. Currently, an existing scheduling information element for the UWB application usually has a problem of high signaling overheads. Therefore, an enhanced scheduling IE design for the UWB application needs to be provided, to reduce the signaling overheads of the scheduling information element for the UWB application.

**SUMMARY**

Embodiments of this application disclose a scheduling method for a UWB, to reduce signaling overheads.

According to a first aspect, an embodiment of this application provides a scheduling method for a UWB. The method includes: generating scheduling information, where the scheduling information includes a time unit bitmap and a bitmap offset, the time unit bitmap indicates whether a time unit is used by a UWB device to transmit a UWB signal, the bitmap offset is used to determine a start time unit in which the UWB device transmits the UWB signal, and a time unit corresponding to a 1$^{st}$ bit of the time unit bitmap is the start time unit; and sending the scheduling information.

In this embodiment of this application, whether each time unit is used by the UWB device to transmit the UWB signal may be determined by using the bitmap offset and the time unit bitmap. The bitmap offset is used to determine the start time unit in which the UWB device transmits the UWB signal, so that bits occupied by the time unit bitmap can be reduced. This further reduces signaling overheads.

In a possible implementation, a value of the bitmap offset is a quantity of time units before the start time unit in one measurement period. The measurement period is a time period in which one or more UWB devices complete one or more measurement tasks. For example, measurement may be one or more tasks of ranging, sensing, positioning, or communication tasks. The start time unit is a time unit in the measurement period. The measurement period may include a control phase, a measurement phase, and a report phase.

In this implementation, the value of the bitmap offset is the quantity of time units before the start time unit in the one measurement period, so that the start time unit in which the UWB device transmits the UWB signal is determined based on the value of the bitmap offset.

In a possible implementation, a value of the bitmap offset is a quantity of time units before the start time unit in one communication period. The communication period is an entire period for completing one or more communication tasks. The start time unit is a time unit in the communication period.

In this implementation, the value of the bitmap offset is the quantity of time units before the start time unit in the one communication period, so that the start time unit in which the UWB device transmits the UWB signal is determined based on the value of the bitmap offset.

In a possible implementation, the time unit bitmap includes K bits, K is an integer greater than 0, and when one of the K bits is set to a specified value, the specified value indicates that a time unit corresponding to the bit is used by the UWB device to transmit the UWB signal. The specified value is 0 or 1.

In this implementation, whether each time unit is used by the UWB device to transmit the UWB signal can be accurately indicated.

In a possible implementation, the measurement period is a ranging period, namely, a ranging round. The measurement period may alternatively be a positioning round or a sensing round.

In a possible implementation, the time unit bitmap is a time unit bitmap corresponding to some time units in one measurement period, and the scheduling information further includes a field indicating a scheduling period in which the UWB device transmits the UWB signal.

Both the time unit bitmap and the bitmap offset can be used to determine a time unit for transmitting the UWB signal in a 1$^{st}$ scheduling period in which the UWB device transmits the UWB signal. The scheduling information further includes a field indicating a scheduling period in which the UWB device transmits the UWB signal. All of the time unit bitmap, the bitmap offset, and the scheduling period can be used to determine a time unit for transmitting the UWB signal in each scheduling period in which the UWB device transmits the UWB signal. Because a quantity of time units corresponding to the time unit bitmap is equal to or less than a quantity of time units in one scheduling period, all of the time unit bitmap, the bitmap offset, and the scheduling period can be used to determine the time unit for transmitting the UWB signal in each scheduling period in which the UWB device transmits the UWB signal. This can reduce the signaling overheads.

In a possible implementation, the scheduling information further includes a field indicating a quantity of repetitions of transmitting the UWB signal by the UWB device.

In this implementation, the scheduling information further includes the field indicating the quantity of repetitions of transmitting the UWB signal by the UWB device, so that the quantity of repetitions of transmitting the UWB signal by the UWB device can be flexibly indicated.

In a possible implementation, the scheduling information implicitly (or non-explicitly) indicates a quantity of repetitions of transmitting the UWB signal by the UWB device. For example, any scheduling information considers by default that the quantity of repetitions of transmitting the UWB signal by the UWB device is 16, and the scheduling information does not need to indicate, by using carried information, the quantity of repetitions of transmitting the UWB signal by the UWB device. In other words, the UWB device can learn of the quantity of repetitions of transmitting the UWB signal without using the scheduling information. For example, the quantity of repetitions of transmitting the UWB signal is preconfigured for the UWB device.

In this implementation, the scheduling information implicitly (or non-explicitly) indicates the quantity of repetitions of transmitting the UWB signal by the UWB device, so that the occupied bits can be reduced.

In a possible implementation, the scheduling information further includes a field indicating the UWB device to periodically transmit the UWB signal.

In this implementation, the scheduling information further includes the field indicating the UWB device to periodically transmit the UWB signal, so that the UWB device can periodically transmit the UWB signal. This further reduces the signaling overheads.

In a possible implementation, the scheduling information further includes a field indicating a length of the time unit bitmap.

In this implementation, the scheduling information further includes the field indicating the length of the time unit bitmap, so that the length of the time unit bitmap can be accurately determined, and a time unit corresponding to each bit in the time unit bitmap can be determined.

In a possible implementation, the scheduling information further includes an address of the UWB device, and a length of the address of the UWB device is 2 bytes or 8 bytes.

In this implementation, the scheduling information further includes the address of the UWB device, so that the UWB device learns of a time unit to be occupied by the UWB device to transmit the UWB signal.

In a possible implementation, the scheduling information further includes a field indicating an address type of the UWB device, and the address type of the UWB device includes a short address and an extended address.

In this implementation, the scheduling information further includes the field indicating the address type of the UWB device, to be applicable to UWB devices of different address types.

In a possible implementation, the scheduling information further includes a scheduling list and a field indicating a quantity of list elements in the scheduling list, one list element in the scheduling list is used to schedule one UWB device, and the time unit bitmap and the bitmap offset correspond to a same list element in the scheduling list.

In this implementation, the quantity of list elements in the scheduling list can be accurately indicated.

In a possible implementation, the scheduling information includes a control field and a scheduling list field. The control field includes the field indicating the address type of the UWB device, the field indicating the quantity of list elements in the scheduling list field, and the field indicating the UWB device to periodically transmit the UWB signal. A list element in the scheduling list field includes the time unit bitmap, the bitmap offset, the field indicating the scheduling period in which the UWB device transmits the UWB signal, the field indicating the quantity of repetitions of transmitting the UWB signal by the UWB device, the address of the UWB device, and the field indicating the length of the time unit bitmap.

In this implementation, the bitmap offset is used to determine the start time unit in which the UWB device transmits the UWB signal, so that the bits occupied by the time unit bitmap can be reduced. This further reduces the signaling overheads. In addition, because the quantity of time units corresponding to the time unit bitmap is equal to or less than the quantity of time units in the one scheduling period, all of the time unit bitmap, the bitmap offset, and the scheduling period can be used to determine the time unit for transmitting the UWB signal in each scheduling period in which the UWB device transmits the UWB signal. This can further reduce the signaling overheads.

In a possible implementation, the time unit is any one of the following: a slot (for example, a ranging slot), a ranging scheduling time unit (ranging scheduling time unit, RSTU), or a sensing scheduling time unit (sensing scheduling time unit, SSTU). The sensing scheduling time unit is a time unit that can be used to determine duration of a sensing block, a sensing round, and a sensing slot. The time unit may alternatively be another time length.

In this implementation, the time unit may be flexibly configured based on an actual application scenario.

In a possible implementation, the method is applied to a ranging, sensing, or positioning scenario.

In this implementation, in a ranging, sensing, or positioning scenario in which a UWB is applied, the signaling overheads can be reduced by performing the scheduling method according to the first aspect.

In a possible implementation, the method is applied to an application scenario with a repetition period transmission structure, for example, a narrow-band assisted multi-millisecond (narrow-band assisted multi-millisecond, NBA-MMS)-based ranging scenario, an uplink time difference of arrival (uplink time difference of arrival, UL-TDOA)-based positioning scenario, and a downlink time difference of arrival (downlink time difference of arrival, DL-TDOA)-based positioning and sensing scenario.

In this implementation, the method is applied to the application scenario with the repetition period transmission structure. This can effectively reduce the signaling overheads.

According to a second aspect, an embodiment of this application provides another scheduling method for a UWB. The method includes: receiving first scheduling information, where the first scheduling information includes a time unit bitmap and a bitmap offset, the time unit bitmap indicates whether a time unit is used by a UWB device to transmit a UWB signal, the bitmap offset is used to determine a start time unit in which the UWB device transmits the UWB signal, and a time unit corresponding to a 1st bit of the time unit bitmap is the start time unit; and transmitting the UWB signal based on the first scheduling information.

In this embodiment of this application, both the time unit bitmap and the bitmap offset can be used to indicate a plurality of time units allocated to the UWB device for transmitting the UWB signal. Because the bitmap offset is used to determine the start time unit in which the UWB device transmits the UWB signal, bits occupied by the time unit bitmap are reduced. This further reduces signaling overheads.

In a possible implementation, a value of the bitmap offset is a quantity of time units before the start time unit in one measurement period. The measurement period is an entire period for completing a ranging, sensing, positioning, or communication task. The start time unit is a time unit in the measurement period.

In this implementation, the value of the bitmap offset is the quantity of time units before the start time unit in the one measurement period, so that the start time unit in which the UWB device transmits the UWB signal is determined based on the value of the bitmap offset, and the bits occupied by the time unit bitmap can be reduced.

In a possible implementation, a value of the bitmap offset is a quantity of time units before the start time unit in one communication period. The communication period is an entire period for completing one or more communication tasks. The start time unit is a time unit in the communication period.

In this implementation, the value of the bitmap offset is the quantity of time units before the start time unit in the one communication period, so that the start time unit in which the UWB device transmits the UWB signal is determined based on the value of the bitmap offset, and the bits occupied by the time unit bitmap can be reduced.

In a possible implementation, the time unit bitmap includes K bits, K is an integer greater than 0, and when one of the K bits is set to a specified value, the specified value indicates that a time unit corresponding to the bit is used by the UWB device to transmit the UWB signal. The specified value is 0 or 1.

In this implementation, whether each time unit is used by the UWB device to transmit the UWB signal can be accurately indicated.

In a possible implementation, the measurement period is a ranging period, namely, a ranging round. The measurement period may alternatively be a positioning round or a sensing round.

In a possible implementation, the time unit bitmap is a time unit bitmap corresponding to some time units in one measurement period, and the first scheduling information further includes a field indicating a scheduling period in which the UWB device transmits the UWB signal.

Both the time unit bitmap and the bitmap offset can be used to determine a time unit for transmitting the UWB signal in a 1st scheduling period in which the UWB device transmits the UWB signal. The first scheduling information further includes a field indicating a scheduling period in which the UWB device transmits the UWB signal. All of the time unit bitmap, the bitmap offset, and the scheduling period can be used to determine a time unit for transmitting the UWB signal in each scheduling period in which the UWB device transmits the UWB signal. Because a quantity of time units corresponding to the time unit bitmap is equal to or less than a quantity of time units in one scheduling period, all of the time unit bitmap, the bitmap offset, and the scheduling period can be used to determine the time unit for transmitting the UWB signal in each scheduling period in which the UWB device transmits the UWB signal. This can reduce the signaling overheads.

In a possible implementation, the first scheduling information further includes a field indicating a quantity of repetitions of transmitting the UWB signal by the UWB device.

In this implementation, the first scheduling information further includes the field indicating the quantity of repetitions of transmitting the UWB signal by the UWB device, so that the quantity of repetitions of transmitting the UWB signal by the UWB device can be flexibly indicated.

In a possible implementation, the first scheduling information implicitly indicates (or non-explicitly) a quantity of repetitions of transmitting the UWB signal by the UWB device. For example, any first scheduling information considers by default that the quantity of repetitions of transmitting the UWB signal by the UWB device is 16, and the first scheduling information does not need to indicate, by using carried information, the quantity of repetitions of transmitting the UWB signal by the UWB device. In other words, the UWB device can learn of the quantity of repetitions of transmitting the UWB signal without using the first scheduling information. For example, the quantity of repetitions of transmitting the UWB signal is preconfigured for the UWB device.

In this implementation, the first scheduling information implicitly (or non-explicitly) indicates the quantity of repetitions of transmitting the UWB signal by the UWB device, so that the occupied bits can be reduced.

In a possible implementation, the first scheduling information further includes a field indicating the UWB device to periodically transmit the UWB signal.

In this implementation, the first scheduling information further includes the field indicating the UWB device to periodically transmit the UWB signal, so that the UWB device can periodically transmit the UWB signal. This further reduces the signaling overheads.

In a possible implementation, the first scheduling information further includes a field indicating a length of the time unit bitmap.

In this implementation, the first scheduling information further includes the field indicating the length of the time unit bitmap, so that the length of the time unit bitmap can be accurately determined, and a time unit corresponding to each bit in the time unit bitmap can be determined.

In a possible implementation, the first scheduling information further includes an address of the UWB device, and a length of the address of the UWB device is 2 bytes or 8 bytes.

In this implementation, the first scheduling information further includes the address of the UWB device, so that the UWB device learns of a time unit to be occupied by the UWB device to transmit the UWB signal.

In a possible implementation, the first scheduling information further includes a field indicating an address type of the UWB device, and the address type of the UWB device includes a short address and an extended address.

In this implementation, the first scheduling information further includes the field indicating the address type of the UWB device, to be applicable to UWB devices of different address types.

In a possible implementation, the first scheduling information further includes a scheduling list and a field indicating a quantity of list elements in the scheduling list, one list element in the scheduling list is used to schedule one UWB device, and the time unit bitmap and the bitmap offset correspond to a same list element in the scheduling list.

In this implementation, the quantity of list elements in the scheduling list can be accurately indicated.

In a possible implementation, the first scheduling information includes a control field and a scheduling list field. The control field includes the field indicating the address type of the UWB device, the field indicating the quantity of list elements in the scheduling list field, and the field indicating the UWB device to periodically transmit the UWB signal. The list element in the scheduling list field includes the time unit bitmap, the bitmap offset, the field indicating the scheduling period in which the UWB device transmits the UWB signal, the field indicating the quantity of repetitions of transmitting the UWB signal by the UWB device, the address of the UWB device, and the field indicating the length of the time unit bitmap.

In this implementation, the bitmap offset is used to determine the start time unit in which the UWB device transmits the UWB signal, so that the bits occupied by the time unit bitmap can be reduced. This further reduces the signaling overheads. In addition, because the quantity of time units corresponding to the time unit bitmap is equal to or less than the quantity of time units in the one scheduling period, all of the time unit bitmap, the bitmap offset, and the scheduling period can be used to determine the time unit for transmitting the UWB signal in each scheduling period in which the UWB device transmits the UWB signal. This can further reduce the signaling overheads.

In a possible implementation, the time unit is any one of the following: a slot (for example, a ranging slot), an RSTU, or an SSTU. The time unit may alternatively be another time length.

In this implementation, the time unit may be flexibly configured based on an actual application scenario.

In a possible implementation, the method is applied to a ranging, sensing, or positioning scenario.

In this implementation, in a ranging, sensing, or positioning scenario in which a UWB is applied, the signaling overheads can be reduced by performing the scheduling method according to the first aspect.

In a possible implementation, the method is applied to an application scenario with a repetition period transmission structure, for example, an NBA-MMS-based ranging scenario, a UL-TDOA-based positioning scenario, and a DL-TDOA-based positioning and sensing scenario.

In this implementation, the method is applied to the application scenario with the repetition period transmission structure. This can effectively reduce the signaling overheads.

In a possible implementation, the method further includes: receiving second scheduling information, where a format of the second scheduling information is different from a format of the first scheduling information; and the transmitting the UWB signal based on the first scheduling information includes: transmitting the UWB signal based on a sequence of receiving the first scheduling information and the second scheduling information, and the first scheduling information.

In this implementation, a UWB signal is transmitted based on a sequence of receiving scheduling information in different formats, and one of the scheduling information. This can reduce power consumption.

For technical effect brought by the possible implementations of the first aspect, refer to the descriptions of the technical effect of the first aspect or the possible implementations of the first aspect.

According to a third aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to generate scheduling information, where the scheduling information includes a time unit bitmap and a bitmap offset, the time unit bitmap indicates whether a time unit is used by a UWB device to transmit a UWB signal, the bitmap offset is used to determine a start time unit in which the UWB device transmits the UWB signal, and a time unit corresponding to a 1st bit of the time unit bitmap is the start time unit; and the transceiver module is configured to send the scheduling information.

For possible implementations of the communication apparatus in the third aspect, refer to the possible implementations of the first aspect.

For technical effect brought by the possible implementations of the third aspect, refer to the descriptions of the technical effect of the first aspect or the possible implementations of the first aspect.

According to a fourth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive first scheduling information, where the first scheduling information includes a time unit bitmap and a bitmap offset, the time unit bitmap indicates whether a time unit is used by a UWB device to transmit a UWB signal, the bitmap offset is used to determine a start time unit in which the UWB device transmits the UWB signal, and a time unit corresponding to a 1st bit of the time unit bitmap is the start time unit; and the processing module is configured to transmit the UWB signal based on the first scheduling information.

In a possible implementation, the transceiver module is further configured to receive second scheduling information, where a format of the second scheduling information is different from a format of the first scheduling information; and the processing module is specifically configured to transmit the UWB signal based on a sequence of receiving the first scheduling information and the second scheduling information, and the first scheduling information.

For possible implementations of the communication apparatus in the fourth aspect, refer to the possible implementations of the second aspect.

For technical effect brought by the possible implementations of the fourth aspect, refer to the descriptions of the technical effect of the second aspect or the possible implementations of the second aspect.

According to a fifth aspect, an embodiment of this application provides another communication apparatus. The communication apparatus includes a processor, the processor is coupled to a memory, and the memory is configured to store a program or instructions. When the program or the instructions are executed by the processor, the communication apparatus is enabled to perform the method according to the first aspect to the second aspect.

In this embodiment of this application, in a process of performing the method, a process of sending information (or signal) in the method may be understood as a process of outputting information based on instructions of the processor.

When the information is output, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information to the processor. Further, after the transceiver receives the information, other processing may need to be performed on the information before the information is input to the processor.

An operation like sending and/or receiving related to the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor, that executes computer instructions in the memory to perform these methods. For example, the processor may be further configured to execute the program stored in the memory. When the program is executed, the communication apparatus is enabled to perform the method according to the first aspect or any possible implementation of the first aspect.

In a possible implementation, the memory is located outside the communication apparatus. In a possible implementation, the memory is located in the communication apparatus.

In a possible implementation, the processor and the memory may alternatively be integrated into one device, that is, the processor and the memory may alternatively be integrated together.

In a possible implementation, the communication apparatus further includes the transceiver. The transceiver is configured to receive or send a signal, and the like.

According to a sixth aspect, this application provides another communication apparatus. The communication apparatus includes a processing circuit and an interface circuit, the interface circuit is configured to obtain data or output data, and the processing circuit is configured to perform the method according to the first aspect or the second aspect.

According to a seventh aspect, this application provides a computer-readable storage medium. The computer-readable storage medium stores a computer program, the computer program includes program instructions, and when the program instructions are executed, a computer is enabled to perform the method according to the first aspect or the second aspect.

According to an eighth aspect, this application provides a computer program product. The computer program product includes a computer program, the computer program includes program instructions, and when the program instructions are executed, a computer is enabled to perform the method according to the first aspect or the second aspect.

According to a ninth aspect, this application provides a communication system, including the communication apparatus according to the third aspect or any possible implementation of the third aspect, and the communication apparatus according to the fourth aspect or any possible implementation of the fourth aspect.

According to a tenth aspect, this application provides a chip, including a processor and a communication interface. The processor reads, through the communication interface, instructions stored in a memory, to perform the method according to the first aspect or the fourth aspect.

## BRIEF DESCRIPTION OF DRAWINGS

To describe technical solutions in embodiments of this application or in the background more clearly, the following describes accompanying drawings for describing embodiments of this application or the background.

FIG. 1 is a diagram of each phase in a ranging round in the conventional technology;
FIG. 2 is a diagram of DL-TDOA positioning based on a UWB signal;
FIG. 3 is a schematic of an example of a star topology structure;
FIG. 4 is a schematic of an example of a point-to-point topology structure or a mesh topology structure;
FIG. 5 shows an example of a UWB system to which a technical solution according to this application is applicable;
FIG. 6 is a flowchart of a scheduling method for a UWB according to an embodiment of this application;
FIG. 7 is a flowchart of another scheduling method for a UWB according to an embodiment of this application;
FIG. 8 is a diagram of a scheduling indication in a ranging scenario according to an embodiment of this application;
FIG. 9 shows an example of a list element in scheduling information according to an embodiment of this application;
FIG. 10 shows an example in which a bitmap indicates whether a time unit is used by a UWB device to transmit a UWB signal in the conventional technology;
FIG. 11 shows an example in which a time unit bitmap indicates whether a time unit is used by a UWB device 1 to transmit a UWB signal according to an embodiment of this application;
FIG. 12 shows another example of a list element in scheduling information according to an embodiment of this application;
FIG. 13 is a diagram of a time sequence of a non-interlacing MMS ranging (non-interlacing MMS ranging) process according to an embodiment of this application;

FIG. 14 is a diagram of a time sequence of another non-interlacing MMS ranging process according to an embodiment of this application;

FIG. 15 is a group of typical scheduling modes in which a DL-TDOA positioning process can be completed;

FIG. 16 is a diagram of scheduling of DL-TDOA positioning that is repeated for eight times according to an embodiment of this application;

FIG. 17 is a diagram of a structure of a communication apparatus 1700 according to an embodiment of this application;

FIG. 18 is a diagram of a structure of another communication apparatus 180 according to an embodiment of this application; and

FIG. 19 is a diagram of a structure of another communication apparatus 190 according to an embodiment of this application.

## DESCRIPTION OF EMBODIMENTS

In the specification, claims, or accompanying drawings of this application, terms "first", "second", and the like are intended only to distinguish between different objects but do not describe a particular sequence. It may be understood that various numbers in embodiments of this application are merely used for distinguishing for ease of description and are not used to limit the scope of embodiments of this application. Sequence numbers of the foregoing processes do not mean execution sequences, and the execution sequences of the processes should be determined based on functions and internal logic of the processes. In addition, terms such as "include" and "have" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with another embodiment.

Terms used in the following embodiments of this application are merely intended to describe specific embodiments, but are not intended to limit this application. Terms "one", "a", "the", "the foregoing", "this" and "the one" of singular forms used in this specification and the appended claims of this application are also intended to include plural forms, unless otherwise specified in the context clearly. It should also be understood that a term "and/or" used in this application means and includes any or all possible combinations of one or more listed items. For example, "A and/or B" may indicate the following three cases: Only A exists, only B exists, and both A and B exist, where A and B may be singular or plural. A term "a plurality of" used in this application means two or more. In text descriptions of this application, a character "/" usually indicates an "or" relationship between associated objects.

It may be understood that in embodiments of this application, "B corresponding to A" indicates that there is a correspondence between A and B, and B may be determined based on A. However, it should also be understood that determining (or generating) B based on (or based on) A does not mean that B is determined (or generated) based on (or based on) A only, and B may alternatively be determined (or generated) based on (or based on) A and/or other information.

For ease of understanding of solutions of this application, the following first describes terms and technical solutions in embodiments of this application.

Ranging round (ranging round), positioning round (positioning round), sensing round (sensing round), measurement period, and communication period

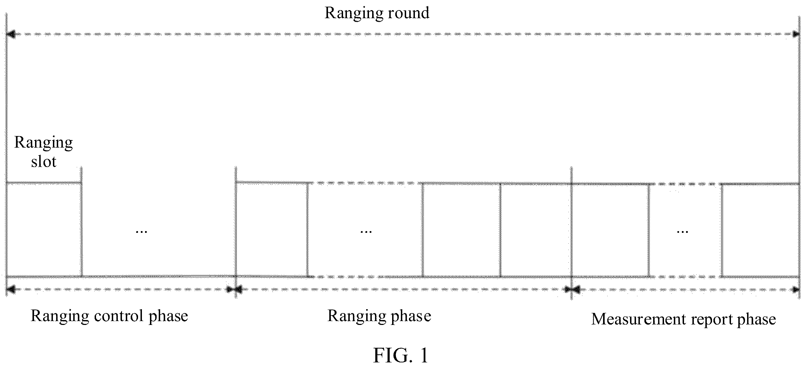

In the IEEE 802.15.4z standard, a single ranging process is defined as a ranging round (ranging round). In the IEEE 802.15.4z standard, the ranging round is defined as follows: The ranging round is a time period of sufficient duration to complete one entire ranging period involving a set of ERDEVs participating in ranging exchange (a ranging round is a period of sufficient duration to complete one entire range-measurement cycle involving the set of ERDEVs participating in the ranging exchange). A minimum processing time unit in each ranging round is a ranging slot (ranging slot). A ranging round is divided into three phases: a ranging control phase (ranging control phase), a ranging phase (ranging phase), and a measurement report phase (measurement report phase). FIG. 1 is a diagram of each phase in a ranging round in the conventional technology. Details are shown in FIG. 1. In the IEEE 802.15.4z standard, the ranging control phase includes one ranging slot. However, in the IEEE 802.15.4ab standard currently under discussion and formulation, the ranging control phase may include more than one ranging slot.

In embodiments of this application, a single positioning process, namely, a process of completing a positioning task, is defined as a positioning round. The positioning round may have another name. This is not limited in this application. The positioning round may be a period of time (or time period) sufficient to complete one entire positioning task. A meaning of the positioning round is similar to a meaning of the ranging round, and a difference lies in that one is a time period corresponding to ranging, and the other is a time period corresponding to positioning. A minimum processing time unit of each positioning round is a positioning slot (positioning slot). A positioning round may be divided into three phases: a positioning control phase (positioning control phase), a positioning phase (positioning phase), and a positioning report phase (positioning report phase).

In embodiments of this application, a single sensing process, namely, a process of completing a sensing task, is defined as a sensing round. The sensing round may have another name. This is not limited in this application. The sensing round may be a period of time (or time period) sufficient to complete one entire sensing task. A meaning of the sensing round is similar to the meaning of the ranging round, and a difference lies in that one is the time period corresponding to ranging, and the other is a time period corresponding to sensing. A minimum processing time unit of each sensing round is a sensing slot (sensing slot). A sensing round may be divided into three phases: a sensing control phase (sensing control phase), a sensing phase (sensing phase), and a sensing report phase (sensing report phase).

A measurement period is a time period in which one or more UWB devices complete one or more measurement tasks. The measurement task herein may be a ranging task, a positioning task, a sensing task, or the like. The measurement period may be the ranging round, the positioning round, or the sensing round. The communication period is a time period in which one or more UWB devices complete one or more communication tasks.

In addition, it should be further noted that names of different phases in a single measurement round (for example, the ranging round, the sensing round, or the positioning round) are merely examples, and do not constitute any limitation on the protection scope of this application. For example, the measurement control phase may be understood as a phase used to configure a parameter required in the measurement round. For another example, the measurement phase may be understood as a phase used to perform measurement. For another example, the measurement result report phase may be understood as a phase used to report the measurement result, and may also be referred to as an end of the measurement phase. In addition, it should be further noted that in embodiments of this application, a size of each field indicates a quantity of bits occupied by the field.

**UWB positioning**

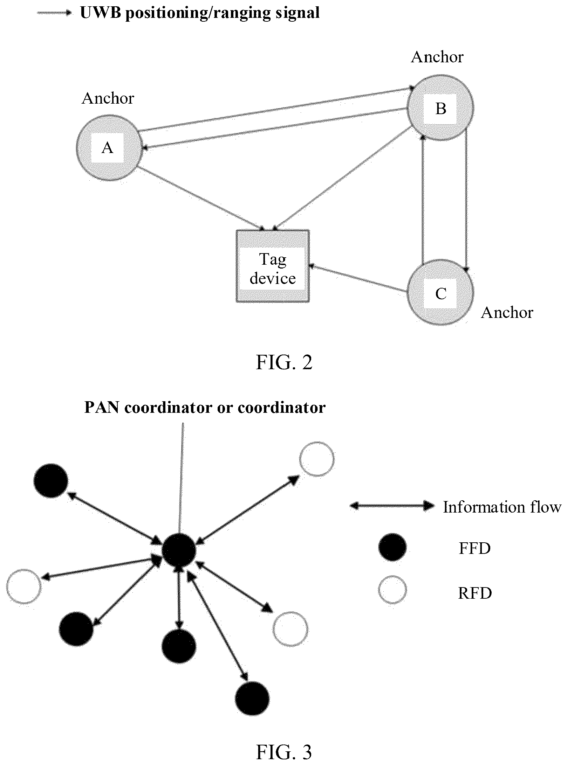

A UWB can be used for indoor positioning. A principle method of the UWB positioning includes but is not limited to UL-TDOA and DL-TDOA. FIG. 2 is a diagram of DL-TDOA positioning based on a UWB signal. The DL-TDOA positioning based on the UWB signal may be referred to as UWB DL-TDOA positioning. In FIG. 2, A, B, and C indicate anchor devices, and arrows indicate flow directions of UWB positioning/ranging signals. It can be learned from FIG. 2 that, the UWB DL-TDOA positioning is used as an example. In the method, three or more anchor devices are arranged in indoor space, and bidirectional UWB signal interaction is performed between the anchor devices to provide positioning signals for a tag device. The tag device listens to the UWB positioning/ranging interaction signals between the anchor devices, and calculates a time difference of arrival between the signals, to calculate a location of the tag device, thereby implementing a positioning function.

The following describes the conventional technology 1 and the conventional technology 2 that are related to a scheduling solution provided in embodiments of this application.

Conventional technology 1:

The conventional technology 1 provides a scheduling information element for UWB ranging, namely, a ranging device management information element (ranging device management information element, RDM IE). Table 1 shows a format of the RDM IE in the conventional technology.

Table 1

| Bits: 0 | 1 | 2-7 | Octets: variable |
|---------|---|-----|------------------|
| SIU | Address Size | RDM List Length | RDM List |

Specifically, meanings of some fields in Table 1 are as follows:
The SIU (slot index used) field indicates an access mode used in a current ranging process. If SIU is equal to 0, the current RDM IE is used to manage a ranging process based on contention access. If SIU is equal to 1, the current RDM IE is used to manage a ranging process based on scheduling access.

The address size field indicates an address type of a device participating in the ranging process. If address size is equal to 0, it indicates that addresses of all devices related to the current RDM list (list) are short addresses, that is, an address length is 2 bytes (Byte). If address size is equal to 1, it indicates that addresses of all devices related to the current RDM list are extended addresses (long addresses), that is, an address length is 8 bytes (Byte).

The RDM list length field indicates a quantity of elements in the RDM list, namely, a quantity of list elements (list element) in a format shown in Table 2. Table 2 shows the format of the list element in the RDM list in the conventional technology 1. In embodiments of this application, the list element may be referred to as a scheduling list element (scheduling list element).

The RDM list field is a list, and the format of each element in the list is shown in Table 2.

Table 2

| Bits: 0 | 1-7 | Octets: 2/8 |
|---|---|---|
| Ranging Role | Ranging Slot Index | Address |

Specifically, meanings of some fields in Table 2 are as follows:

The ranging role field indicates a ranging role of a device corresponding to the address field of the current list element. If ranging role is equal to 0, it indicates that the device is a ranging responder (responder). If ranging role is equal to 1, it indicates that the device is a ranging initiator (initiator).

The ranging slot index field indicates a subscript of a slot allocated to the device that participates in ranging and that corresponds to the current list element. An address of the device is determined by the address field in Table 2.

The address field indicates the address of the device that participates in ranging and that corresponds to the current list element.

It is assumed that there are N (an integer greater than 0) devices in a ranging system that currently uses the conventional technology 1, and each device needs to invoke a maximum of S (an integer greater than 0) slots. In this case, a message length M required by the scheduling IE proposed in the conventional technology 1 may be expressed as:

If the N devices are short address devices, the message length of the IE is $(M = 1 + 3 * N * S)$ bytes (byte).

If the N devices are all long address devices, the message length of the IE is $(M = 1 + 9 * N * S)$ bytes (byte).

It can be found from the foregoing analysis that the scheduling IE in the conventional technology 1 has the following disadvantages:

High signaling overheads: When the quantity of devices N is fixed, the length of the scheduling IE increases as S increases. For example, the short address is used as an example. When S is equal to 32, the length of the scheduling IE is $(M = 1 + 96 * N)$ bytes; or when S is equal to 64, the length of the scheduling IE is $(M = 1 + 192 * N)$ bytes. Therefore, when the quantity of devices N is fixed, if the quantity of slots S that currently need to be scheduled by the system is large (for example, when $S \geq 64$), high signaling overheads are caused.

Limited flexibility: Each list element (Table 2) of the RDM IE in the conventional technology 1 allows only one device to indicate one slot, and one device cannot indicate a plurality of slots. As a result, flexibility of indicating scheduling by the RDM IE is limited. Specifically, if a device needs to indicate a plurality of slots, a plurality of list elements shown in Table 2 are required. Consequently, signaling indication redundancy is caused, that is, the foregoing signaling overhead problem is caused.

Conventional technology 2:

The conventional technology 2 provides a format of a bitmap (bitmap)-based scheduling information element (information element, IE) for a UWB. Table 3 shows the format of the bitmap-based scheduling IE provided in the conventional technology 2.

Table 3

| Octets: 1 | Variable value (one or more octets (octets)) |
|---|---|
| Control (control field) | Scheduling List (scheduling list field) |

The control field occupies a size of one octet (octet), and the scheduling list field occupies a size of one or more octets. Table 4 shows a format of the control field of the bitmap-based scheduling IE provided in the conventional technology 2.

Table 4

| Bits: 0 | 1-7 |
|---|---|
| Address Type (address type) | Scheduling List Length (scheduling list length) |

When address type is 0, it indicates that a device address is a short address, that is, an address length is 2 bytes (16 bits). When address type is 1, it indicates that a device address is a long address (or extended address), that is, an address length is 8 bytes (64 bits). The device address herein is an address of a device scheduled by the bitmap-based scheduling IE, namely, the address of the device related to the scheduling list.

Scheduling list length indicates a quantity of list elements in the scheduling list field. The list element is carried in the scheduling list field. Table 5 shows a format of a list element in the scheduling list in the conventional technology 2.

Table 5

| Bits: 0-1 | 2-7 | Variable value (one or more octets (octets)) | 2 octets or 8 octets |
|---|---|---|---|
| Bitmap Size (bitmap size) | Reserved (reserved) | Bitmap (bitmap) | Address (address) |

Bitmap (bitmap) in Table 5 indicates a one-dimensional bit string, for example, 0000100100100000. Bitmap size indicates a length of the bitmap. A relationship between a value of bitmap size and the length of bitmap is shown in Table 6 below. Table 6 shows the relationship between the value of bitmap size and the length of bitmap.

Table 6

| Value of bitmap size | Meaning |
|---|---|
| 0 | 1-byte bitmap (8-bit bitmap) |
| 1 | 2-byte bitmap (16-bit bitmap) |
| 2 | 4-byte bitmap (32-bit bitmap) |
| 3 | 8-byte bitmap (64-bit bitmap) |

For example, bitmap shown in Table 7 indicates a bit string whose length is 8, that is, indicates eight slots (each bit corresponds to one slot), that is, a corresponding value of bitmap size is 0. If a bit is 1, it indicates that a device that participates in ranging and that corresponds to a list element corresponding to bitmap sends a UWB signal in a slot corresponding to the bit. Correspondingly, if a bit is 0, it indicates that the device does not send a UWB signal in a slot corresponding to the bit 0.

Table 7

| 0 | 1 | 0 | 1 | 1 | 0 | 1 | 1 |
|---|---|---|---|---|---|---|---|

Bitmap shown in Table 7 sequentially indicates a slot 1 to a slot 8 (or a slot 0 to a slot 7) from left to right. If bits corresponding to the slot 2, the slot 4, the slot 5, the slot 7, and the slot 8 are all 1, it indicates that the device sends the UWB signal in the slot 2, the slot 4, the slot 5, the slot 7, and the slot 8. If bits corresponding to the slot 1, the slot 3, and the slot 6 are all 0, it indicates that the device does not send the UWB signal in the slot 1, the slot 3, and the slot 6.

It should be noted that, in this specification, a manner of describing, for example, bitmap in Table 7 is a left-to-right indication manner by default. In other words, bitmap sequentially indicates a near-to-far sequence of the slots from left to right. For example, for bitmap whose length is 1 byte, bitmap sequentially indicates a slot 1 to a slot 8 (or a slot 0 to a slot 7) from left to right. In addition, bitmap in embodiments of this application may alternatively be described from right to left, that is, sequentially indicate a near-to-far sequence of the slots. A description sequence of bitmap is not limited in embodiments of this application. This specification is described by using an indication manner from left to right as an example.

It is assumed that there are N (an integer greater than 0) devices in a system that currently uses the conventional technology 2, and each device needs to invoke a maximum of S (an integer greater than 0) slots. In this case, a message length M required by the scheduling IE proposed in the conventional technology 2 may be expressed as:

If the N devices are all short address devices, the message length of the IE is $M = 1 + N * \left(3 + \left\lceil \frac{S}{8} \right\rceil\right)$ bytes.

If the N devices are all long address devices, the message length of the IE is $M = 1 + N * \left(9 + \left\lceil \frac{S}{8} \right\rceil\right)$ bytes.

The symbol $\lceil \rceil$ indicates rounding up.

It can be found from the foregoing analysis that the scheduling IE in the conventional technology 2 has the following disadvantages:

High signaling overheads: When the quantity of devices N is fixed, the message length of the scheduling IE increases as S increases. The short address is used as an example. When S is equal to 32, the length of the scheduling IE is (M = 1 + N * 7) bytes; or when S is equal to 64, the length of the scheduling IE is (M = 1 + 11 * N) bytes. Therefore, when the quantity of devices N is fixed, if the quantity of slots S that currently need to be scheduled by the system is large (for example, when S ≥ 64), high signaling overheads are caused.

Message indication redundancy: In the conventional technology 2, the bitmap indicates whether a slot is used to transmit the UWB signal. For a slot that does not participate in sending, a bit still needs to be set to 0. As a result, a message indication is not flexible enough, and unnecessary message indication redundancy is caused.

For UWB applications with a repetition period transmission structure such as narrow-band assisted multi-millisecond (narrow-band assisted multi-millisecond, NBA-MMS) and DL-TDOA/UL-TDOA positioning and sensing, using only the bitmap to indicate whether a slot is used to transmit the UWB signal causes unnecessary repetition redundancy, and when a quantity of repetitions is large, large indication redundancy is caused.

It can be learned from the foregoing descriptions that the scheduling information elements provided in the conventional technology 1 and the conventional technology 2 both have the disadvantage of high overheads. To avoid a problem of the high signaling overheads caused by using the scheduling information element provided in the conventional technology 1 or the conventional technology 2, embodiments of this application provide a UWB scheduling solution with low signaling overheads. The following describes a topology structure and a system to which the UWB scheduling solution provided in embodiments of this application is applicable.

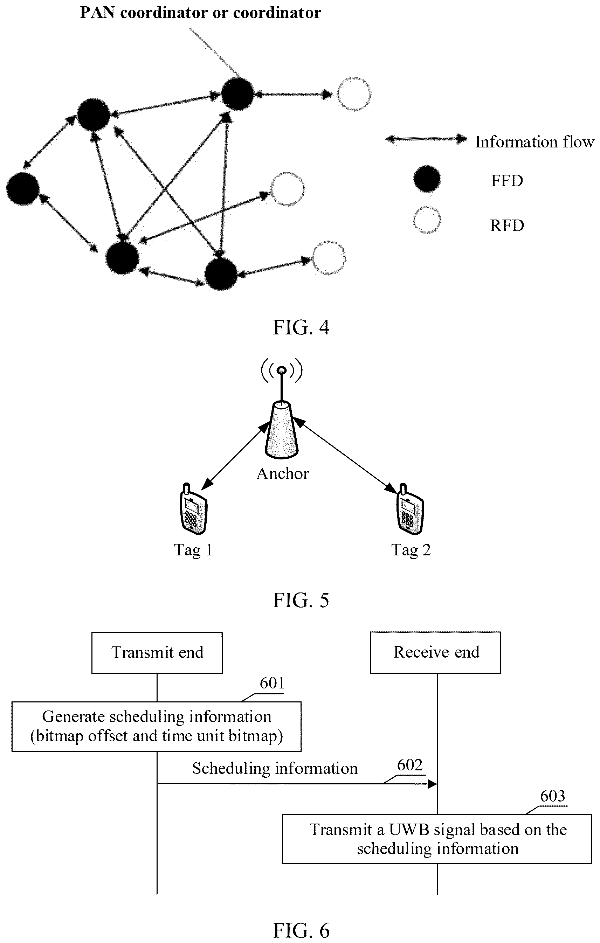

The UWB scheduling solution provided in embodiments of this application may operate in a star topology structure, a point-to-point topology structure, or a mesh topology structure. The UWB scheduling solution provided in embodiments of this application may further operate in another topology structure. This is not limited in this application. FIG. 3 is a schematic of an example of a star topology structure. As shown in FIG. 3, a star topology involves data communication between one or more other devices and a central control node, for example, a personal area network (personal area network, PAN) or a coordinator shown in FIG. 3. The UWB scheduling solution provided in embodiments of this application is applicable to data communication/sensing/ranging/positioning between a central control node and one or more other devices in a star topology. FIG. 4 is a schematic of an example of a point-to-point topology structure or a mesh topology structure. The UWB scheduling solution provided in embodiments of this application is also applicable to communication/sensing/ranging/positioning between different devices in a point-to-point topology structure or a mesh topology structure (FIG. 4). In FIG. 3 and FIG. 4, a black node is a full-function device (full-function device, FFD), and a white node is a reduced-function device (reduced-function device, RFD). The FFD may serve as the PAN coordinator or coordinator, but the RFD cannot serve as the PAN coordinator or coordinator. FFDs can communicate with each other, and the FFD and the RFD can communicate with each other. RFDs cannot directly communicate with each other, and can only communicate with the FFD, or forward data externally via one FFD. In a UWB system, the FFD may be an anchor device or a tag device with a strong computing capability (for example, a UWB tag carried on a smartphone), and the RFD is tag device, and has only some computing capabilities.

The technical solutions of this application are mainly applicable to the UWB system, for example, a UWB system that supports the IEEE 802.15.4a standard, the IEEE 802.15.4z standard, the IEEE 802.15.4ab standard, or a next-generation standard of the IEEE 802.15.4ab standard. A person skilled in the art easily understands that aspects of this application may be extended to other networks using various standards or protocols, for example, Bluetooth (Bluetooth), a high-performance radio LAN (high performance radio LAN, HIPERLAN) (a wireless standard similar to the IEEE 802.11 standard, mainly used in Europe), a wide area network (WAN), a personal area network (personal area network, PAN), or another network currently known or later developed. Therefore, regardless of a used coverage area and a used wireless access protocol, the various aspects provided in embodiments of this application are applicable to any appropriate wireless network.

FIG. 5 shows an example of a UWB system to which a technical solution according to an embodiment of this application is applicable. The UWB system includes an anchor (anchor, only one anchor is shown), and one or more tags (tag, only a tag 1 and a tag 2 are shown). Protocols supported by the anchor and the tag may include protocols such as IEEE 802.15.4a, IEEE 802.15.4z, and IEEE 802.15.4ab. Certainly, with continuous evolution and development of communication technologies, the WLAN protocol may further include a next-generation protocol of IEEE 802.15.4ab, and the like. The anchor may be an access point, and the tag mat be a station (Station, STA). Both the access point and the STA support a WLAN protocol, and the WLAN protocol may include IEEE 802.11be (or referred to as Wi-Fi 7 or the EHT protocol).

The access point is an apparatus having a wireless communication function, supports communication by using the WLAN protocol, and has a function of communicating with another device (for example, a station or another access point) in the WLAN network. Certainly, the access point may further have a function of communicating with another device. The UWB system includes one or more access point (access point, AP) stations and one or more non-access point stations (non-access point station, non-AP STA). For ease of description, in this specification, an access point station is referred to as an access point (AP), and a non-access point station is referred to as a station (STA).

The access point may be an entire device, or may be a chip, a processing system, or the like installed in the entire device. The device in which the chip or the processing system is installed may implement a method and a function in embodiments of this application under control of the chip or the processing system (namely, the AP). The AP in embodiments of this application is an apparatus that provides a service for the station (Station, STA), and may support, for example, IEEE 802.15.4a, IEEE 802.15.4z, IEEE 802.15.4ab, or a next generation thereof. For example, the AP may be a communication entity like a communication server, a router, a switch, a bridge, a computer, or a mobile phone. The AP may include an anchor (anchor), a macro base station, a micro base station (also referred to as a small cell), a picocell base station, a femto base station, a relay station, an access point, a gNB, a transmission reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in devices in various forms, to implement the method and the function in embodiments of this application.

The station is an apparatus having a wireless communication function, supports communication by using the WLAN protocol, and has a capability of communicating with another station or access point in the WLAN network. For example, the STA is any communication apparatus that allows a user to communicate with the AP and further communicate with the WLAN. The communication apparatus may be an entire device, or may be a chip, a processing system, or the like installed in the entire device. The device in which the chip or the processing system is installed may implement a method and a function in embodiments of this application under control of the chip or the processing system (namely, the station). The STA may include a tag (tag) device/a smart tag (smart tag) device, a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine-type communication (machine-type communication, MTC) terminal, or the like. The station may include various handheld devices, vehicle-mounted devices, wearable devices, or computing devices that have a wireless communication function, or other processing devices connected to a wireless modem. For example, the station may be a handheld device (handset), a vehicle-mounted device, a wearable device, a terminal in an internet of things or an internet of vehicles network, a terminal in any form in 5G and a communication system evolved after 5G, or the like that has a wireless communication function. This is not limited in this application. The station may support IEEE 802.15 series protocols such as IEEE 802.15.4a, IEEE 802.15.4z, and IEEE 802.15.4ab.

With reference to the accompanying drawings, the following describes the UWB scheduling solution provided in embodiments of this application.

FIG. 6 is a flowchart of a scheduling method for a UWB according to an embodiment of this application. The method shown in FIG. 6 may be applied to scenarios such as ranging, sensing, positioning, and communication, for example, scenarios such as NBA-MMS-based ranging, DL-TDOA-based positioning, and UL-TDOA-based positioning and sensing. As shown in FIG. 6, the method includes the following steps.

601: A transmit end generates scheduling information.

The transmit end may be a UWB device that supports a UWB standard. The transmit end may be an AP, or may be a station. The transmit end may be an FFD, or may be an RFD. The transmit end may be a ranging, sensing, positioning, or communication initiator (initiator), namely, a ranging initiator, a sensing initiator, a positioning initiator, or a communication initiator, may be a ranging, sensing, positioning, or communication responder (responder), namely, a ranging responder, a sensing responder, a positioning responder, or a communication responder, or may be a third-party device (which may be referred to as a controller device), that is, may not be an initiator or a responder (responder) of ranging, sensing, positioning, or communication. For example, the transmit end is the third-party device, and the scheduling information is a ranging control message (ranging control message, RCM). After receiving the scheduling information, all initiators/rangers that participate in a ranging process interpret information related to the initiators/rangers in the scheduling information (for example, sending of a corresponding slot subscript), and execute corresponding ranging processes in a measurement phase.

The scheduling information includes a time unit bitmap (bitmap) and a bitmap offset (bitmap offset). The bitmap offset may be referred to as a bitmap offset field. The time unit bitmap indicates whether a time unit is used by a UWB device to transmit a UWB signal. For example, the time unit bitmap includes K bits, each bit corresponds to one time unit, and K is an integer greater than 0. When one of the K bits is set to a specified value, the specified value indicates that a time unit corresponding to the bit is used by the UWB device to transmit the UWB signal. The specified value is 0 or 1. K time units corresponding to the K bits in the time unit bitmap are K time units in one measurement period or positioning period, namely, some time units in the measurement period or positioning period. The measurement period may be a ranging period (namely, a ranging round), a sensing round, or a positioning round. The bitmap offset is used to determine a start time unit in which the UWB device transmits the UWB signal. A time unit corresponding to a 1st bit of the time unit bitmap is the start time unit. It may be understood that the bitmap offset is used to determine the time unit corresponding to the 1st bit of the time unit bitmap. For example, a value of the bitmap offset is a quantity of time units before the start time unit in one measurement period, and a plurality of time units corresponding to the time unit bitmap are a plurality of time units in the measurement period. For example, the value of the bitmap offset is a quantity of time units before the start time unit in one positioning period, and the plurality of time units corresponding to the time unit bitmap are a plurality of time units in the positioning period. The following describes implementations of the time unit bitmap and the bitmap offset with reference to an example of the scheduling information.

In a possible implementation, the scheduling information further includes a field indicating a scheduling period in which the UWB device transmits the UWB signal (referred to as a period index field below). The scheduling period is a period in which the UWB device transmits the UWB signal in one measurement period or communication period. For example, one measurement period or communication period includes eight scheduling periods of the UWB device, and the UWB device transmits the UWB signal in a 3rd time unit and a 5th time unit in each scheduling period, and does not transmit the UWB signal in another time unit. For example, the period index field may indicate consecutive values, for example, 1 to 32 or 1 to 64. A value indicated by P bits included in the period index field indicates the scheduling period in which the UWB device transmits the UWB signal, and P is an integer greater than 0. For example, P is any one of 4, 5, 6, 7, 8, and the like. For example, the value indicated by the period index field is a quantity of time units corresponding to the scheduling period, for example, 1 to 32 time units. For example, the period index field indicates non-consecutive natural numbers. A natural number indicated by H bits included in the period index field indicates the scheduling period in which the UWB device transmits the UWB signal, and H is an integer greater than 0. For example, H is any one of 1, 2, 3, and the like. For example, the period index field indicates any one of a group of quantities of time units (including a plurality of time units), for example, a quantity of time units such as 8, 16, 32, 64, or 128. For example, when the value of the period index field is 0 (that is, period index is equal to 0), the scheduling period in which the UWB device periodically transmits the UWB signal is 8 time units, that is, the scheduling period of UWB transmission is 8 time units. For another example, when the value of the period index field is 1 (that is, period index is equal to 1), the scheduling period in which the UWB device periodically transmits the UWB signal is 16 time units, that is, the scheduling period of UWB transmission is 16 time units. The quantity of time units that can be indicated by the period index field is not limited in embodiments of this application. A unit of the value indicated by the period index field may be a single time unit, or may be a plurality of time units. The time unit may be a slot, for example, a ranging slot, may be an RSTU, or may be a sensing scheduling time unit. The sensing scheduling time unit is a time unit that can be used to determine duration of a sensing block, a sensing round, and a sensing slot. The time unit may alternatively be another time length. This is not limited in embodiments of this application. Because a quantity of time units corresponding to the time unit bitmap is equal to or less than a quantity of time units in one scheduling period, all of the time unit bitmap, the bitmap offset, and the scheduling period can be used to determine the time unit for transmitting the UWB signal in each scheduling period in which the UWB device transmits the UWB signal. This can reduce the signaling overheads.

In a possible implementation, the scheduling information further includes a field indicating a quantity of repetitions of transmitting the UWB signal by the UWB device (referred to as a repetition index field below). The repetition index field may be referred to as a repetition index field or another field. A value indicated by R bits included in the repetition index field indicates the quantity of repetitions of transmitting the UWB signal by the UWB device, and R is an integer greater than 0. For example, R is any one of 2, 3, 4, 5, 6, and the like. For example, the repetition index field indicates consecutive values, for example, 1 to 32 times. A quantity that can be indicated by the repetition index field is not limited in embodiments of this application. For example, the repetition index field indicates non-consecutive natural numbers. For example, the repetition index field may indicate any quantity in a value combination (including a plurality of non-consecutive natural numbers), for example, 8, 16, 32, 64, or 128. For example, when a value of the repetition index field is 1 (that is, repetition index is equal to 1), a quantity of times of periodically transmitting the UWB signal (or periodic UWB transmission) is 16. For another example, when the value of the repetition index field is 2 (that is, repetition index is equal to 2), the quantity of times of periodic UWB transmission is 32. The non-consecutive values that may be indicated by the repetition index field are not limited in embodiments of this application. In this implementation, the repetition index field indicates the quantity of repetitions of transmitting the UWB signal by the UWB device. Both the time unit bitmap and the bitmap offset can be used to indicate a time unit in each scheduling period in which the UWB device transmits the UWB signal, so that fewer bits are occupied. This can reduce the signaling overheads.

In a possible implementation, the scheduling information implicitly (or non-explicitly) indicates a quantity of repetitions of transmitting the UWB signal by the UWB device. For example, any scheduling information considers by default that the quantity of repetitions of transmitting the UWB signal by the UWB device is 16, and the scheduling information does not need to indicate, by using carried information, the quantity of repetitions of transmitting the UWB signal by the UWB device. In other words, the UWB device can learn of the quantity of repetitions of transmitting the UWB signal without using the scheduling information. For example, the quantity of repetitions of transmitting the UWB signal is preconfigured for the UWB device. In this implementation, the scheduling information implicitly (or non-explicitly) indicates the quantity of repetitions of transmitting the UWB signal by the UWB device, so that the occupied bits can be reduced.

In a possible implementation, the scheduling information further includes a field indicating the UWB device to periodically transmit the UWB signal (referred to as a period mode field below). In this implementation, the scheduling information further includes the field indicating the UWB device to periodically transmit the UWB signal, so that the UWB device can periodically transmit the UWB signal. This further reduces the signaling overheads.

In a possible implementation, the scheduling information further includes a field indicating a length of the time unit bitmap (referred to as a bitmap size field below). In this implementation, the scheduling information further includes the field indicating the length of the time unit bitmap, so that the length of the time unit bitmap can be accurately determined, and a time unit corresponding to each bit in the time unit bitmap can be determined.

In a possible implementation, the scheduling information further includes an address of the UWB device, and a length of the address of the UWB device is 2 bytes or 8 bytes. In this implementation, the scheduling information further includes the address of the UWB device, so that the UWB device learns of a time unit to be occupied by the UWB device to transmit the UWB.

In a possible implementation, the scheduling information includes a control (control) field and a scheduling list (scheduling list) field. The scheduling list field includes one or more list elements. For example, the time unit bitmap, the bitmap offset, the address of the UWB device, and the bitmap size field are included in a same list element. For another example, the time unit bitmap, the bitmap offset, the address of the UWB device, the bitmap size field, the period index field, and the repetition index field are included in a same list element.

602: The transmit end sends the scheduling information.

A possible implementation of step 602 is as follows: The transmit end sends the scheduling information in a broadcast or multicast manner. Another possible implementation of step 602 is as follows: The transmit end separately sends the scheduling information to one or more to-be-scheduled UWB devices (namely, receive ends) in a unicast manner. Correspondingly, the receive end receives the scheduling information from the transmit end.

603: The receive end transmits the UWB signal based on the scheduling information.

The receive end may be an anchor, or may be a tag. The receive end may be an FFD, or may be an RFD. The receive end is a UWB device scheduled by using the scheduling information, and the receive end receives the scheduling information from the transmit end. The receive end may be a ranging, sensing, positioning, or communication initiator (initiator), or may be a ranging, sensing, positioning, or communication responder. For example, a list element in the scheduling information includes a time unit bitmap, a bitmap offset, and an address 1. The bitmap offset is used to determine a start time unit in which a UWB device 1 (namely, a receive end) transmits a UWB signal, the time unit bitmap indicates whether a time unit is used by the UWB device 1 to transmit the UWB signal, and the address 1 is an address of the UWB device 1. The list element is used to schedule the UWB device 1. Step 603 is optional. In actual application, there may be a plurality of receive ends that receive the scheduling information and transmit the UWB signal based on the scheduling information, to complete ranging, sensing, positioning, or communication.

That the receive end transmits the UWB signal based on the scheduling information may be performing sensing, ranging, positioning, or communication by transmitting the UWB signal based on the scheduling information. It should be understood that the scheduling information indicates the time unit in which the UWB device 1 transmits the UWB signal, and the UWB device 1 may transmit the UWB signal in these time units for performing sensing, ranging, positioning, or communication. In some embodiments, the scheduling information indicates time units used by a plurality of UWB devices to transmit the UWB signal, that is, the scheduling information schedules the plurality of receive ends to perform sensing, ranging, positioning, or communication by transmitting the UWB signal. The plurality of UWB devices perform sensing, ranging, positioning, or communication by transmitting the UWB signal based on the scheduling information.

In this embodiment of this application, whether each time unit is used by the UWB device to transmit the UWB signal may be determined by using the bitmap offset and the time unit bitmap. The bitmap offset is used to determine the start time unit in which the UWB device transmits the UWB signal, so that bits occupied by the time unit bitmap can be reduced. This further reduces the signaling overheads.

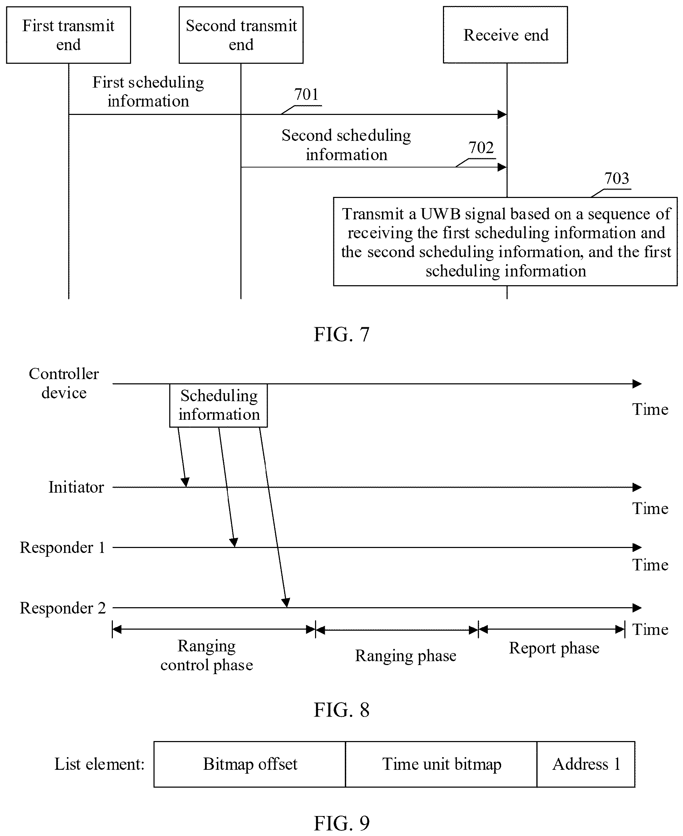

FIG. 7 is a flowchart of another scheduling method for a UWB according to an embodiment of this application. A method procedure in FIG. 7 is a possible implementation of the method described in FIG. 6. In this implementation, a UWB signal is transmitted based on a sequence of receiving scheduling information in different formats, and one of the scheduling information. This can reduce power consumption. As shown in FIG. 7, the method includes the following steps.

701: A first transmit end sends first scheduling information.

The first transmit end may be the transmit end in FIG. 6, and the first scheduling information may be the scheduling signal in FIG. 6. Correspondingly, a receive end receives the first scheduling information from the first transmit end. The receive end herein may be the receive end in FIG. 6.

702: A second transmit end sends second scheduling information.

The second transmit end may be the transmit end in FIG. 6, or may not be the transmit end in FIG. 6. Correspondingly, the receive end receives the second scheduling information from the second transmit end. A format of the second scheduling information is different from a format of the first scheduling information. That the format of the second scheduling information is different from the format of the first scheduling information may be that one or more fields in the second scheduling information are not included in the first scheduling information, or may be that one or more fields in the first scheduling information are not included in the second scheduling information. For example, the second scheduling information includes a second field, and the first scheduling information does not include the second field. It may be understood that if fields in the first scheduling information and fields in the second scheduling information are not completely the same, the format of the second scheduling information is different from the format of the first scheduling information. The second transmit end may be an initiator of ranging, sensing, positioning, or communication, may be a responder of ranging, sensing, positioning, or communication, or may be a third-party device, that is, may not be an initiator or a responder of ranging, sensing, positioning, or communication.

703: The receive end transmits a UWB signal based on a sequence of receiving the first scheduling information and the second scheduling information, and the first scheduling information.

A possible implementation of step 703 is as follows: The first scheduling information and the second scheduling information are scheduling information sequentially received by the receive end in a control phase (for example, a ranging control phase in a same ranging round) in a same operating time period, and the receive end transmits the UWB signal based on the first scheduling information that is received earlier. The receive end may transmit the UWB signal only based on the first scheduling information that is received earlier, and may not decode the second scheduling information that is received later. This can reduce energy consumption.

Another possible implementation of step 703 is as follows: The first scheduling information and the second scheduling information are scheduling information sequentially received by the receive end in a control phase (for example, a ranging control phase in a same ranging round) in a same operating time period, and the receive end transmits the UWB signal based on the first scheduling information that is received later. The receive end may transmit the UWB signal only based on the first scheduling information that is received later, and may not decode the second scheduling information that is received earlier. This can reduce energy consumption.

In this embodiment of this application, the receive end transmits the UWB signal based on the sequence of receiving the scheduling information in different formats, and one of the scheduling information. This can reduce the power consumption.

The following describes, with reference to the accompanying drawings, application of the UWB scheduling solution provided in embodiments of this application to a ranging scenario. FIG. 8 is a diagram of a scheduling indication in a ranging scenario according to an embodiment of this application. In FIG. 8, a controller device sends, in a ranging control phase, the scheduling information provided in embodiments of this application to an initiator, a responder 1, and a responder 2. The controller device may be the transmit end, and the responder 1 or the responder 2 is the receive end. As shown in FIG. 8, the controller device sends, in the ranging control phase, the scheduling information provided in embodiments of this application to all initiators and/or responders that participate in ranging. The scheduling information may be an RCM or another message. After receiving the scheduling information, all the initiators and/or responders that participate in ranging interpret information related to the initiators and/or responders in the scheduling information, execute corresponding ranging procedures in a ranging phase, and in a measurement report phase, the initiators and/or the responders may report measurement results obtained in the ranging phase. FIG. 8 shows application of the UWB scheduling solution to the ranging scenario according to an embodiment of this application. It may be understood that the UWB scheduling solution provided in embodiments of this application may also be used for sensing, DL-TDOA positioning, UL-TDOA positioning, communication, and the like. Details are not described herein again. This specification is specifically described by using a case in which the controller device is a third-party device. The solution described in this specification is also applicable to a case in which the controller device is an initiator or a responder. Details are not described.

FIG. 8 shows that the scheduling information provided in embodiments of this application is used in the ranging control phase. FIG. 8 shows merely an example in which the scheduling information provided in embodiments of this application is used in the control phase (control phase) in a measurement period. The scheduling information provided in embodiments of this application may also be used in the measurement phase or the measurement report phase. Usually, if the scheduling information provided in embodiments of this application is used in the measurement phase and the measurement report phase, the corresponding scheduling indication is used in a next round. The next round may be a round adjacent to the current round, or may be a round that is at least one round apart from the current round. For example, current measurement application is ranging. If the scheduling information provided in embodiments of this application is used in the ranging phase and the measurement report phase, the corresponding scheduling indication is used in a next ranging round. The next ranging round may be a ranging round adjacent to the current ranging round, or may be a ranging round that is at least one ranging round apart from the current ranging round.

The scheduling information provided in embodiments of this application may include the control (control) field and the scheduling list (scheduling list) field. The following separately describes an example of the list element in the scheduling list (scheduling list) field and an example of the control field in the scheduling information.

Example 1: An example of a list element in the scheduling list field in the scheduling information.

Refer to FIG. 9. The list element includes a bitmap offset, a time unit bitmap, and an address 1. FIG. 9 shows an example of the list element in the scheduling information according to an embodiment of this application. As shown in FIG. 9, a list element in the scheduling information includes the bitmap offset, the time unit bitmap, and the address 1. The list element shown in FIG. 9 indicates a time unit to be occupied by a UWB device 1 to transmit a UWB signal, that is, is used to schedule the UWB device 1. The UWB device 1 may be considered as a UWB device scheduled by the list element. The bitmap offset is used to determine a start time unit in which the UWB device 1 transmits the UWB signal. The time unit bitmap indicates whether a time unit is used by the UWB device 1 to transmit the UWB signal. A time unit corresponding to a 1st bit of the time unit bitmap is the start time unit. It may be understood that the bitmap offset is used to determine the time unit corresponding to the 1st bit of the time unit bitmap, and with reference to the bitmap offset and the time unit bitmap, a time unit corresponding to each bit in the time unit bitmap can be determined. The address 1 is an address of the UWB device 1, and a length of the address 1 is 2 bytes or 8 bytes. For example, the list element further includes a bitmap size (bitmap size) field, namely, a field indicating a length of the time unit bitmap. For example, the list element further includes a reserved field, and the reserved (reserved) field includes one or more reserved bits.

The bitmap offset is used to determine a start time unit that is in one measurement period (which may alternatively be a communication period) and in which the UWB device 1 transmits the UWB signal. For example, the bitmap offset indicates a quantity of time units before the start time unit that is in the measurement period and in which the UWB device 1 transmits the UWB signal. In other words, the bitmap offset indicates a quantity of time units before a start time unit that is in a measurement period and in which the UWB device 1 transmits the UWB signal, and the measurement period includes the start time unit. For example, a value of the bitmap offset is a quantity of time units before the start time unit in one measurement period. For example, the bitmap offset indicates a quantity of unused time units before the start time unit that is in the measurement period and in which the UWB device 1 transmits the UWB signal. For example, the value of the bitmap offset is a quantity of unused time units before the start time unit in one measurement period. For example, the value of the bitmap offset is equal to a quantity of time units between a 1st time unit and the start time unit in the measurement period plus 1. It is assumed that the value of the bitmap offset is T, and time units in the measurement period are sequentially a time unit 0 (1st time unit), a time unit 1, a time unit 2, and the like in a time sequence. In this case, the start time unit is the time unit T, and T is an integer greater than 1. For any UWB device, the 1st time unit in the measurement period is known. Therefore, the any UWB device may determine, based on the bitmap offset, the start time unit in which the UWB device transmits the UWB signal, that is, the time unit corresponding to the 1st bit of the time unit bitmap. The time unit corresponding to the 1st bit of the time unit bitmap is the start time unit in which the UWB device 1 transmits the UWB signal.

The bitmap offset may indicate consecutive values. For example, the bitmap offset may indicate a quantity of time units, for example, 0 to 15 time units. The quantity of time units that can be indicated by the bitmap offset is not limited in embodiments of this application. The bitmap offset may also indicate non-consecutive natural numbers. For example, the bitmap offset may indicate any one of a group of quantities of time units, for example, a quantity of time units like 0, 1, 4, 8, 16, or 32. For example, if the value of the bitmap offset is 3, it indicates that the quantity of time units before the start time unit in the measurement period is 8; or if the value of the bitmap offset is 4, it indicates that the quantity of time units before the start time unit in the measurement period is 16. The non-consecutive values that can be indicated by the bitmap offset are not limited in embodiments of this application. A unit of the value of the bitmap offset is not limited in embodiments of this application. The value of the bitmap offset may be one time unit, may be a plurality of time units, or may be an RSTU.

The time unit bitmap corresponds to a plurality of time units, and the time unit bitmap indicates whether a time unit is used by the UWB device 1 to transmit the UWB signal. The time unit corresponding to the 1st bit of the time unit bitmap is the start time unit in which the UWB device 1 transmits the UWB signal. The plurality of time units corresponding to the time unit bitmap are included in a same measurement period or communication period. The bitmap offset is used to determine the start time unit that is in the one measurement period (which may alternatively be the communication period) and in which the UWB device 1 transmits the UWB signal, and the time unit corresponding to the 1st bit of the time unit bitmap is the start time unit. Therefore, the time unit corresponding to each bit in the time unit bitmap can be determined based on the bitmap offset. It is assumed that the time unit bitmap includes K bits, each bit corresponds to one time unit, time units in one measurement period are sequentially a time unit 0, a time unit 1, a time unit 2, ..., and a time unit L (an integer greater than 1) in a time sequence, and the bitmap offset is used to determine that the start time unit in which the UWB device 1 transmits the UWB signal is the time unit 4. In this case, the K bits in the time unit bitmap sequentially correspond to the time unit 4, the time unit 5, ..., and a time unit (3+K). For example, the time unit bitmap includes K bits, K is an integer greater than 0, and when one of the K bits is set to a specified value, the specified value indicates that a time unit corresponding to the bit is used by the UWB device 1 to transmit the UWB signal. The specified value is 0 or 1. For example, the time unit bitmap includes K bits, a time unit corresponding to a bit whose value is 1 is used by the UWB device 1 to transmit the UWB signal, and a time unit corresponding to a bit whose value is 0 is not used by the UWB device 1 to transmit the UWB signal.

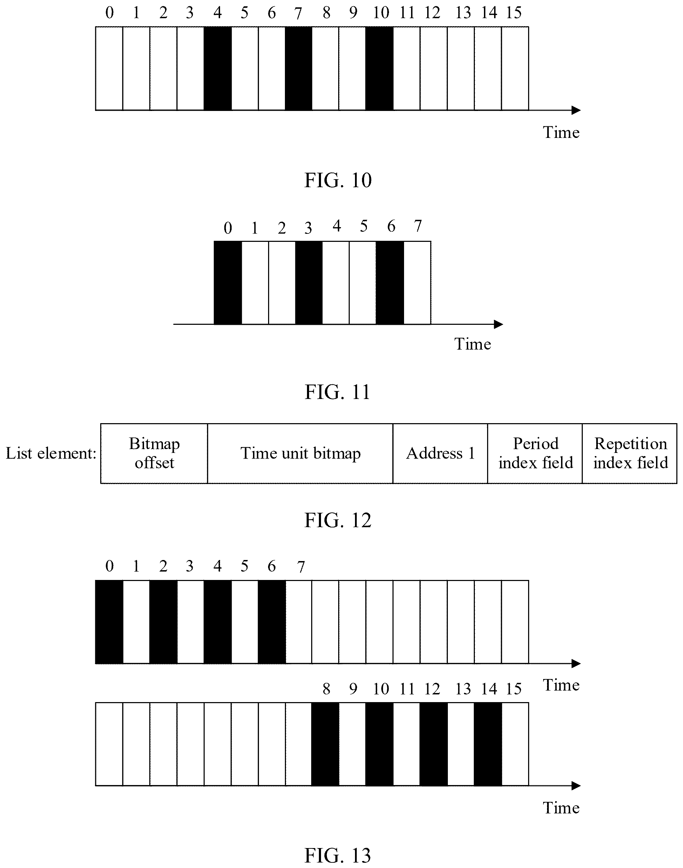

With reference to the bitmap offset and the time unit bitmap, each time unit used by the UWB device 1 to transmit the UWB signal can be determined, and unnecessary indication overheads in the bitmap are reduced, thereby reducing indication overheads of the scheduling information. FIG. 10 shows an example in which a bitmap indicates whether a time unit is used by the UWB device to transmit the UWB signal in the conventional technology. As shown in FIG. 10, each rectangle indicates whether a time unit is used by the UWB device to transmit the UWB signal, and a number above each rectangle indicates a time sequence of the time unit indicated by the rectangle. A black rectangle indicates a time unit used by the UWB device to transmit the UWB signal, and a white rectangle indicates a time unit not used by the UWB device to transmit the UWB signal. A time unit 0 to a time unit 15 are 16 time units corresponding to a bitmap including 16 bits. A time unit corresponding to a 1st bit of the bitmap (namely, the time unit 0 in FIG. 13) is a 1st time unit in a measurement period. The bitmap indicates whether each time unit in the time unit 0 to the time unit 15 is used by the UWB device to transmit the UWB signal. For example, if a bit in the bitmap is 1, it indicates that a time unit corresponding to the bit is used by the UWB device to transmit the UWB signal. The bitmap in FIG. 10 indicates that the time unit 4, the time unit 7, and the time unit 10 in the measurement period are used by the UWB device to transmit the UWB signal, and other time units in the measurement period are not used by the UWB device to transmit the UWB signal. The bitmap occupies 2 bytes, namely, 16 bits.

The bitmap offset can reduce the unnecessary indication overheads in the bitmap, thereby reducing the indication overheads of the scheduling message. It can be learned from observing FIG. 10 that none of the first four time units in the measurement period is used by the UWB device to transmit the UWB signal, which causes a waste of a bitmap indication. Therefore, it may be considered that the bitmap offset indicates the quantity of time units before the start time unit in which the UWB device transmits the UWB signal, thereby reducing an indication length of the bitmap. Specifically, the bitmap offset indicates the quantity of time units before the start time unit in which the UWB device transmits the UWB signal. For example, that bitmap offset is equal to 3 indicates that none of the time units 0 to 3 is used. Correspondingly, the time unit in which the UWB device transmits the UWB signal shown in FIG. 10 may be further indicated by FIG. 11. FIG. 11 shows an example in which a time unit bitmap indicates whether a time unit is used by the UWB device 1 to transmit the UWB signal according to an embodiment of this application. As shown in FIG. 11, each rectangle indicates whether a time unit is used by the UWB device 1 to transmit the UWB signal, and a number above each rectangle indicates a time sequence of the time unit indicated by the rectangle. A black rectangle indicates a time unit used by the UWB device 1 to transmit the UWB signal, and a white rectangle indicates a time unit not used by the UWB device 1 to transmit the UWB signal. A time unit 0 to a time unit 7 are 8 time units corresponding to a time unit bitmap including 8 bits. A time unit corresponding to a 1st bit of the time unit bitmap (namely, the time unit 0 in FIG. 11) is determined based on the bitmap offset. The time unit bitmap indicates whether each time unit in the time unit 0 to the time unit 7 is used by the UWB device 1 to transmit the UWB signal. For example, if a bit in the time unit bitmap is 1, it indicates that a time unit corresponding to the bit is used by the UWB device 1 to transmit the UWB signal. It is assumed that the bitmap offset indicates that the quantity of time units before the start time unit in which the UWB device 1 transmits the UWB signal is 4, that is, the time units 0 to 3 in a measurement period are not used by the UWB device 1 to transmit the UWB signal. In this case, the time unit corresponding to the 1st bit of the time unit bitmap is the time unit 4 in the measurement period, and the time units corresponding to the time unit bitmap are sequentially the time unit 4, the time unit 5, ..., and the time unit 11 in a time sequence. The time units in the measurement period are sequentially the time unit 0, the time unit 1, the time unit 2, and the like in a time sequence. It can be learned from FIG. 11 that an unnecessary indication of the first four time units is moved to the bitmap offset field in the scheduling list field. Therefore, the time unit bitmap may be completed by 8 bits. In other words, in this case, the time unit bitmap needs only 1 byte, and does not need 2 bytes in FIG. 11, thereby reducing message overheads. In other words, the time unit bitmap and the bitmap offset jointly determine a transmission sequence in which the UWB device 1 transmits the UWB signal.

Table 8 and Table 9 show two examples of list elements in the scheduling information provided in embodiments of this application.

Table 8

| Bits: 0-1 | 2- 5 | 6-7 | Variable value (one or more octets (octets)) | 2 octets or 8 octets |
|---|---|---|---|---|
| Bitmap Size (bitmap size) | Bitmap Offset (bitmap offset) | Reserved (reserved) | Bitmap (time unit bitmap) | Address Type (address) 1 |

Refer to Table 8. The bitmap size field occupies 2 bits, namely, a bit 0 and a bit 1; the bitmap offset occupies 4 bits, namely, a bit 2 to a bit 5, the reserved field occupies 2 bits, namely, a bit 6 and a bit 7, the time unit bitmap occupies one or more bytes, that is, the length of the time unit bitmap is a variable value, and the address 1 occupies 2 bytes or 8 bytes. It may be understood that Table 8 shows merely an example of a list element in the scheduling list field in the scheduling information, and a quantity of bits occupied by each field and a location of the field in the list element are not limited.

Table 9

| Bits: 0-1 | 2 | 3-7 | Variable value (one or more octets (octets)) | 2 octets or 8 octets | Bits: 0-3 | 4- 7 |
|---|---|---|---|---|---|---|
| Bitmap Size | Bitmap Offset | Reserved (reserved) | Bitmap (time unit bitmap) | Address Type | Bitmap Offset | Reserved (reserved) |
| Bits: 0-1 | 2 | 3-7 | Variable value (one or more octets (octets)) | 2 octets or 8 octets | Bits: 0-3 | 4- 7 |
| (bitmap size) | Presence (bitmap offset presence field) | | | (address) 1 | (bitmap offset) | |

Refer to Table 9. The bitmap size field occupies 2 bits, namely, a bit 0 and a bit 1, the bitmap offset presence field occupies 1 bit, namely, a bit 2, the reserved field occupies 5 bits, namely, a bit 3 to a bit 7, the time unit bitmap occupies one or more bytes, that is, the length of the time unit bitmap is a variable value, the address 1 occupies 2 bytes or 8 bytes, the bitmap offset occupies 4 bits, namely, a bit 0 to a bit 3, and the reserved field occupies 4 bits, namely, a bit 4 to a bit 7. The bitmap offset presence field indicates whether the list element includes the bitmap offset field. For example, when bitmap offset presence field is equal to 1, the bitmap offset field appears, that is, the list element includes the bitmap offset field. When bitmap offset presence field is equal to 0, the bitmap offset field does not appear, that is, the list element does not include the bitmap offset field. It may be understood that Table 9 shows merely an example of a list element in the scheduling list field in the scheduling information, and a quantity of bits occupied by each field and a location of the field in the list element are not limited.

Refer to Table 8. The list element in Example 1 may occupy 4 bytes (corresponding to a short address) or 10 bytes (corresponding to an extended address). Refer to Table 9. The list element in Example 1 may occupy 5 bytes (corresponding to a short address) or 11 bytes (corresponding to an extended address).

Example 2: An example of a list element in the scheduling list field in the scheduling information. The list element in Example 2 may be obtained by further combining the bitmap offset field with a field having a periodic transmission feature. For example, a period index field and a repetition index field are added to the list element in Example 1.

The list element includes a bitmap offset, a time unit bitmap, an address 1, a period index field, and a repetition index field. The bitmap offset in Example 2 may be the same as the bitmap offset in Example 1, and the address 1 in Example 2 may be the same as the address 1 in Example 1. The time unit bitmap indicates a time unit used by a UWB device 1 to transmit a UWB signal in each scheduling period in which the UWB device 1 transmits the UWB signal. Alternatively, the time unit bitmap indicates whether a time unit in each scheduling period in which the UWB device 1 transmits the UWB signal is used by the UWB device 1 to transmit the UWB signal. The period index field indicates a scheduling period in which the UWB device 1 transmits the UWB signal, and the repetition index field indicates a quantity of repetitions of transmitting the UWB signal by the UWB device 1. The repetition index field is optional. FIG. 12 is another example of a list element in the scheduling information according to an embodiment of this application. As shown in FIG. 12, a list element in the scheduling information includes the bitmap offset, the time unit bitmap, the address 1, the period index field, and the repetition index field. For example, the list element further includes a bitmap size (bitmap size) field, namely, a field indicating a length of the time unit bitmap. A size and a location of the bitmap size (bitmap size) field are not limited in embodiments of this application. For example, the list element further includes a reserved field, and the reserved (reserved) field includes one or more reserved bits. A size and a location of the reserved field are not limited in embodiments of this application.

In a possible implementation, the time unit bitmap indicates the time unit used by the UWB device 1 to transmit the UWB signal in each scheduling period in which the UWB device 1 transmits the UWB signal, namely, a time unit to be occupied by the UWB device 1 to transmit the UWB signal. For example, K bits in the time unit bitmap one-to-one correspond to K time units in each scheduling period in which the UWB device 1 transmits the UWB signal, each scheduling period is K time units, and K is an integer greater than 1. For example, the time unit bitmap includes 8 bits, each scheduling period in which the UWB device 1 transmits the UWB signal includes 8 time units, the time unit bitmap indicates that a 3rd time unit and a 5th time unit in each scheduling period in which the UWB device 1 transmits the UWB signal are used by the UWB device 1 to transmit the UWB signal, and other time units are not used by the UWB device 1 to transmit the UWB signal. For example, the K bits in the time unit bitmap one-to-one correspond to K consecutive time units (for example, the first K time units or the last K time units) in each scheduling period in which the UWB device 1 transmits the UWB signal, each scheduling period is Q time units, and Q is an integer greater than K. For example, the time unit bitmap includes 8 bits, each scheduling period in which the UWB device 1 transmits the UWB signal includes 16 time units, the 8 bits included in the time unit bitmap one-to-one correspond to the eight earliest time units in the scheduling period, and the time unit bitmap indicates that a 3rd time unit and a 5th time unit in each scheduling period in which the UWB device 1 transmits the UWB signal are used by the UWB device 1 to transmit the UWB signal, and other time units are not used by the UWB device 1 to transmit the UWB signal.

With reference to the bitmap offset, the time unit, and the period index field, the time unit for transmitting the UWB signal in each scheduling period in which the UWB device 1 transmits the UWB signal may be determined, and unnecessary indication overheads in the bitmap are further reduced, thereby reducing indication overheads of the scheduling information. A difference between the time unit bitmap in Example 2 and the time unit bitmap in Example 1 lies in that the time unit bitmap in Example 1 does not indicate, in a periodic mode, whether the time unit is used by the UWB device 1 to transmit the UWB signal, and with reference to the period index field, the time unit bitmap in Example 2 indicates, in a periodic mode, whether the time unit is used by the UWB device 1 to transmit the UWB signal. For example, the time unit bitmap in Example 1 includes 64 bits, each bit corresponds to one time unit, and the time unit bitmap in Example 1 indicates whether 64 time units corresponding to the 64 bits are used by the UWB device 1 to transmit the UWB signal. The time unit bitmap in Example 2 includes 8 bits, each bit corresponds to one time unit, the period index field indicates that the scheduling period is 8 time units, and the time unit bitmap in Example 2 separately indicates whether the 8 time units (64 time units in total) in the eight scheduling periods are used by the UWB device 1 to transmit the UWB signal. It can be learned from this example that a quantity of bits in the time unit bitmap in Example 2 is less than a quantity of bits in the time unit bitmap in Example 1. Therefore, with reference to the period index field, the time unit bitmap in Example 2 indicates, in the periodic mode, whether the time unit is used by the UWB device 1 to transmit the UWB signal, so that the length of the time unit bitmap can be reduced. This further reduces signaling overheads.

The time unit bitmap indicates a time unit used by the UWB device 1 to transmit the UWB signal in a 1st scheduling period in which the UWB device 1 transmits the UWB signal. The bitmap offset is used to determine a start time unit that is in one measurement period and in which the UWB device 1 transmits the UWB signal. It may be understood that the time unit bitmap and the bitmap offset jointly determine UWB transmission in the 1st scheduling period, and the period index field and the repetition index field further determine the period and the quantity of repetitions of periodic UWB transmission. For a 2nd scheduling period, a 3rd scheduling period, ..., and an Xth scheduling period of the UWB device 1, a transmission sequence of the UWB signal in each scheduling period is the same as the transmission sequence in the 1st period. X is the quantity of repetitions indicated by the repetition index field, and X is an integer greater than 1. For example, the scheduling periods of the UWB device 1 are sequentially the 1st scheduling period, the 2nd scheduling period, the 3rd scheduling period, ..., and the Xth scheduling period. The time unit bitmap and the bitmap offset jointly determine that a 1st time unit and a 3rd time unit in the 1st scheduling period are used by the UWB device 1 to transmit the UWB signal, and the period index field and the repetition index field further determine that a 1st time unit and a 3rd time unit in the 2nd scheduling period, the 3rd scheduling period, ..., and the Xth scheduling period are used by the UWB device 1 to transmit the UWB signal. Time units in each scheduling period are sequentially a 1st time unit, a 2nd time unit, a 3rd time unit, ..., and a Cth time unit in a time sequence, where C is a quantity of time units included in the scheduling period, and C is an integer greater than 1. In other words, for a periodic UWB transmission process of any UWB device, the periodic UWB transmission process may be completely determined by determining a time unit for transmitting a UWB signal in a 1st scheduling period of the UWB device (indicated by the time unit bitmap field and the bitmap offset), a scheduling period (indicated by the period index field), and a quantity of times of repeated transmission (indicated by the repetition index field). In other words, a specific time unit allocated to the any UWB device for the periodic UWB transmission may be completely determined.

Table 10, Table 11, Table 12, and Table 13 are four examples of list elements in the scheduling information provided in embodiments of this application.

Table 10

| Bits: 0-1 | 2-5 | 6-7 | Variable value (one or more octets) | 2 octets or 8 octets | Bits: 0-3 | 4-7 |
|---|---|---|---|---|---|---|
| Bitmap Size (bitmap size) field | Bitmap Offset (bitmap offset) | Reserved (reserved) | Bitmap (time unit bitmap) | Address Type (address) 1 | Period Index | Repetition Index |

Refer to Table 10. The bitmap size field occupies 2 bits, namely, a bit 0 and a bit 1, the bitmap offset occupies 4 bits, namely, a bit 2 to a bit 5, the reserved field occupies 2 bits, namely, a bit 6 and a bit 7, the time unit bitmap occupies one or more bytes, that is, the length of the time unit bitmap is a variable value, the address 1 occupies 2 bytes or 8 bytes, the period index field occupies 4 bits, and the repetition index field occupies 4 bits. It may be understood that Table 10 shows merely an example of a list element in the scheduling information, and a quantity of bits occupied by each field and a location of the field in the list element are not limited.

Table 11

| Bits: 0-1 | 2 | 3 | 4-7 | Variable value (one or more octets (octets)) | 2 octets or 8 octets | Bits: 0-3 | 4-7 |
|---|---|---|---|---|---|---|---|
| Bitmap Size (bitmap size) | Receiver Address Presence | Ranging Role | Bitmap Offset (bitmap offset) | Bitmap (time unit bitmap) | Address Type (address) 1 | Period Index | Repetition Index |

Refer to Table 11. The ranging role field and the receiver address presence field (receiver address presence field) in the conventional technology appear in the format of the list element provided in embodiments of this application. In other words, the scheduling information provided in embodiments of this application may allow the ranging role field and the receiver address presence field to appear, or may allow one of the ranging role field and the receiver address presence field to appear, for example, as shown in the following forms of Table 12 and Table 13. This is not limited in embodiments of this application.

Table 12

| Bits: 0-1 | 2 | 3-6 | 7 | Variable value (one or more octets (octets)) | 2 octets or 8 octets | Bits: 0-3 | 4-7 |
|---|---|---|---|---|---|---|---|
| Bitmap Size (bitmap size) | Receiver addr. presence | Bitmap Offset (bitmap offset) | Reserved (reserved) | Bitmap (time unit bitmap) | Address Type (address) 1 | Period Index | Repetition Index |

Table 13

| Bits: 0-1 | 2 | 3-6 | 7 | Variable value (one or more octets (octets)) | 2 octets or 8 octets | Bits: 0-3 | 4-7 |
|---|---|---|---|---|---|---|---|
| Bitmap Size (bitmap size) | Ranging Role | Bitmap Offset (bitmap offset) | Reserved (reserved) | Bitmap (time unit bitmap) | Address Type (address) 1 | Period Index | Repetition Index |

Table 11, Table 12, and Table 13 are examples in which fields (for example, the ranging role field and the receiver address presence field) in the conventional technology are placed in the scheduling information provided in embodiments of this application. It should be understood that another field in the conventional technology may be further placed in the scheduling information provided in embodiments of this application. In embodiments of this application, a sequence location and a field size of the bitmap offset field, the ranging role field, the receiver address presence field, and the like are not limited. Table 11, Table 12, and Table 13 are merely examples.

Refer to Table 10 to Table 13. The list element in Example 2 may occupy 5 bytes (corresponding to a short address) or 11 bytes (corresponding to an extended address).

Example 3: An example of a list element in the scheduling list field in the scheduling information.

The list element includes a bitmap offset, a time unit bitmap, an address 1, a period index field, a repetition index field, and a period mode field. For example, the period mode field may be referred to as a periodic mode field or another field. For meanings of the fields in Example 3, refer to the meanings of the fields in Example 2. The period mode field indicates a UWB device to periodically transmit a UWB signal. In other words, the period mode field is used to trigger each UWB device scheduled by using the scheduling information to periodically transmit a UWB signal. In other words, the period mode field indicates to trigger a periodic transmission mode. The period mode field may be considered as a periodic transmission mode trigger field. The period mode field may occupy one or more bits. For example, the period mode field includes 1 bit. If a value of the bit is 1, the period mode field indicates the UWB device to periodically transmit the UWB signal, and the scheduling information includes a field related to transmission periodicity, for example, a second field or a third field; or if the value of the bit is 0, the period mode field indicates the UWB device to transmit the UWB signal in another transmission mode, and the scheduling information does not include the field related to transmission periodicity. For example, the scheduling list field in the scheduling information is the same as the scheduling list field in Table 3.

Alternatively, if the period mode field indicates the UWB device to periodically transmit the UWB signal, the scheduling information includes a first field and a second field; or if the period mode field indicates the UWB device to transmit the UWB signal in the another mode, the scheduling information does not include the first field and the second field, and the scheduling list in the scheduling information may be the same as the scheduling list in the scheduling information element in the conventional technology 1 (or the conventional technology 2). It should be understood that the list elements in Example 1 to Example 4 may all indicate the UWB device 1 to periodically transmit the UWB signal. In embodiments of this application, the periodic transmission mode is a mode in which the UWB device periodically transmits the UWB signal and that is implemented by using the scheduling information provided in embodiments of this application, and the another transmission mode is any mode other than the periodic transmission mode.

Table 14 shows an example of a list element in the scheduling information provided in embodiments of this application.

Table 14

| Bits: 0-1 | 2-5 | 6 | 7 | Variable value (one or more octets (octets)) | 2 octets or 8 octets | Bits: 0-3 | 4-7 |
|---|---|---|---|---|---|---|---|
| Bitmap Size (bitmap size) field | Bitmap Offset (bitmap offset) | Period Mode | Reserved (reserved) | Bitmap (time unit bitmap) | Address Type (address) 1 | Period Index | Repetition Index |

Meanings of the fields in Table 14 may be the same as the meanings of the fields in Table 10. A difference between Table 14 and Table 10 lies in that the bit 6 is the period mode field. For example, when period mode is equal to 1, fields related to the transmission periodicity, such as the period index field and the repetition index field, appear and take effect. When period mode is equal to 0, the period index field and the repetition index field, namely, the fields related to the transmission periodicity, do not appear. It may be understood that Table 14 shows merely an example of a list element in the scheduling list field in the scheduling information, and a quantity of bits occupied by each field and a location of the field in the list element are not limited.

Refer to Table 14. The list element in Example 3 may occupy 5 bytes (corresponding to a short address) or 11 bytes (corresponding to an extended address).

In Example 1, Example 2, and Example 3, whether each time unit is used by the UWB device to transmit the UWB signal may be determined by using the bitmap offset and the time unit bitmap. The bitmap offset is used to determine the start time unit in which the UWB device transmits the UWB signal, so that the bits occupied by the time unit bitmap can be reduced. This further reduces the signaling overheads.

Example 4: An example of the control field in the scheduling information.

The control field in the scheduling information includes a period mode field, an address type (Address Type) field, and a scheduling list length (Scheduling List Length) field. The period mode field indicates a UWB device to periodically transmit a UWB signal. In other words, the period mode field is used to trigger each UWB device scheduled by using the scheduling information to periodically transmit a UWB signal. In other words, the period mode field indicates to trigger a periodic transmission mode. The period mode field may be considered as a periodic transmission mode trigger field. In embodiments of this application, the periodic transmission mode is a mode in which the UWB device periodically transmits the UWB signal and that is implemented by using the scheduling information provided in embodiments of this application. The period mode field may occupy one or more bits. For example, the period mode field includes 1 bit. If a value of the bit is 1, the period mode field indicates the UWB device to periodically transmit the UWB signal, and the scheduling information includes a field related to transmission periodicity, for example, a period index field and a repetition index field; or if the value of the bit is 0, the period mode field indicates the UWB device to transmit the UWB signal in another transmission mode, and the scheduling information does not include the field related to transmission periodicity. For example, the scheduling list field in the scheduling information is the same as the scheduling list field in Table 8. For example, when period mode is equal to 0, a format of each list element of the scheduling list field in the scheduling information is shown in Table 8 or Table 9. When period mode is equal to 1, a format of each list element of the scheduling list field in the scheduling information is shown in Table 10/Table 11/Table 12/Table 13. The address type field indicates an address type of the UWB device, and the address type of the UWB device includes a short address (a length of 2 bytes) and an extended address (a length of 8 bytes). For example, the address type field includes 1 bit. If a value of the bit is 0 (that is, address type is 0), the address type field indicates that the address of the UWB device is the short address, that is, the address length is 2 bytes (16 bits); or if the value of the bit is 1 (that is, address type is 1), the address type field indicates that the address of the UWB device is the long address (or extended address), that is, the address length is 8 bytes (64 bits). The scheduling list length field indicates a quantity of list elements in the scheduling list.

Table 15 shows an example of the control field in the scheduling information provided in embodiments of this application.

Table 15

| Bits: 0 | 1-6 | 7 |
|---|---|---|
| Address Type field | Scheduling List Length field | Period Mode field |

Refer to Table 15. The address type field occupies 1 bit, namely, a bit 0, the scheduling list length field occupies 6 bits, namely, a bit 1 to a bit 6, and the period mode field occupies 1 bit, namely, a bit 7. Table 15 shows merely an example of the control field in the scheduling information provided in embodiments of this application. It may be understood that Table 15 shows merely an example of the control field in the scheduling information, and a quantity of bits occupied by each field and a location of the field in the control field are not limited. Refer to Table 10. The control field in the scheduling information provided in embodiments of this application occupies 1 byte.

In Example 4, the control field in the scheduling information includes the period mode field, the address type field, and the scheduling list length field. The period mode field indicates the UWB device to periodically transmit the UWB signal. The control field in the scheduling information can indicate the UWB device to periodically transmit the UWB signal, to reduce signaling overheads by indicating the UWB device to periodically transmit the UWB signal.

The example of the scheduling list field and the example of the control field in the scheduling information are provided above. It should be understood that an example of the scheduling information includes the scheduling list field in Example 1 and the control field in Example 4. Another example of the scheduling information includes the scheduling list field in Example 2 and the control field in Example 4. Another example of the scheduling information includes the scheduling list field in Example 3 and the control field shown in Table 2 or Table 4. The following compares the signaling overheads of the scheduling information provided in embodiments of this application, the signaling overheads of the scheduling information element in the conventional technology 1, and the signaling overheads of the scheduling information element in the conventional technology 2. Table 16 shows the signaling overheads of the scheduling information element in the conventional technology 1, the signaling overheads of the scheduling information element in the conventional technology 2, signaling overheads of scheduling information 1, and signaling overheads of scheduling information 2. The signaling overheads of the scheduling information 1 are equal to signaling overheads of the scheduling information including the scheduling list field in Example 1 and the control field in Example 4, as shown in Table 8, and are also equal to signaling overheads of the scheduling information including the scheduling list field in Example 2 and the control field in Example 4. The overheads of the scheduling information 2 are equal to signaling overheads of the scheduling information including the scheduling list field in Example 1 and the control field in Example 4, as shown in Table 9, and are also equal to signaling overheads of the scheduling information including the scheduling list field in Example 3 and the control field shown in Table 2 or Table 4.

Table 16

| | Short address device (unit: byte) | Extended address device (unit: byte) |
|---|---|---|
| RDM IE in the conventional technology | 1 + 3 * N * S | 1 + 9 * N * S |
| Bitmap-based IE in the conventional technology | $1+N*(3+\lceil S/8 \rceil)$ | $1+N*(9+\lceil S/8 \rceil)$ |
| Scheduling information 1 | 1 + 4 * N | 1 + 10 * N |
| Scheduling information 2 | 1 + 5 * N | 1 + 11 * N |

In Table 16, S indicates a quantity of time units that need to be invoked by a UWB device, and N indicates a quantity of UWB devices that participate in a current UWB application in a system. S is an integer greater than 0, and N is an integer greater than 0. It can be learned from Table 16 that the scheduling information provided in embodiments of this application does not depend on the quantity of time units S. In other words, a size of the scheduling information provided in embodiments of this application does not increase as the quantity of time units S increases. In other words, when a same quantity of time units S needs to be scheduled, and when the quantity of S is large, a message size of the scheduling information provided in embodiments of this application is less than message sizes of the scheduling IEs in the conventional technology 1 and the conventional technology 2. Therefore, air interface resource overheads required for transmitting the scheduling information can be effectively reduced, and air interface time required for transmitting the scheduling information can be reduced.

With reference to examples, the following further compares the signaling overheads of the scheduling information provided in embodiments of this application, the signaling overheads of the scheduling IE in the conventional technology 1, and the signaling overheads of the scheduling IE in the conventional technology 2.

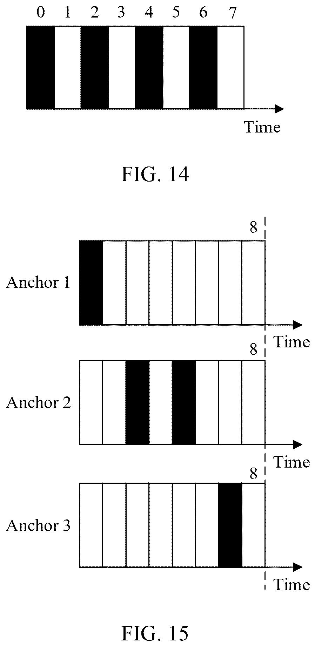

FIG. 13 is a diagram of a time sequence of a non-interlacing MMS ranging (non-interlacing MMS ranging) process according to an embodiment of this application. In FIG. 13, each rectangle indicates whether a time unit is used by a UWB device to transmit a UWB signal, and a number above each rectangle indicates a time sequence of the time unit indicated by the rectangle. A black rectangle indicates a time unit used by the UWB device to transmit the UWB signal, and a white rectangle indicates a time unit not used by the UWB device to transmit the UWB signal. FIG. 13 shows that an initiator needs to send a UWB signal in a time unit 0, a time unit 2, a time unit 4, and a time unit 8, and a responder needs to send a UWB signal in a time unit 8, a time unit 10, a time unit 12, and a time unit 14. To implement scheduling for the responder shown in FIG. 13, that is, to schedule the responder to send the UWB signal in the time unit 8, the time unit 10, the time unit 12, and the time unit 14, a 2-byte bitmap (16 bits) is required to complete a scheduling indication for the responder. However, it can be learned from observing FIG. 13 that the time unit 8 is a start time unit in which the responder transmits the UWB signal, in other words, the first 8 time units (time units 0 to 7) of the responder are not used, resulting in a waste of a bitmap indication. Therefore, it may be considered that a bitmap offset field indicates the start time unit in which the responder transmits the UWB signal, to reduce an indication length of bitmap. For example, a value of the bitmap offset field indicates a quantity of time units before the start time unit in which the responder transmits the UWB signal. For example, that bitmap offset is equal to 7 indicates that the start time unit in which the responder transmits the UWB signal is the time unit 8. For example, the value of the bitmap offset field indicates a quantity of unused time units before the start time unit in which the responder transmits the UWB signal. For example, the bitmap offset field indicates a quantity of unused time units, that is, that bitmap offset is equal to 7 indicates that none of the time units 0 to 7 is used. Correspondingly, the time unit for transmitting the UWB signal shown in FIG. 13 may be indicated by FIG. 14. FIG. 14 is a diagram of a time sequence of another non-interlacing MMS ranging process according to an embodiment of this application. In FIG. 14, each rectangle indicates whether a time unit is used by a UWB device to transmit a UWB signal, and a number above each rectangle indicates a time sequence of the time unit indicated by the rectangle. A black rectangle indicates a time unit used by the UWB device to transmit the UWB signal, and a white rectangle indicates a time unit not used by the UWB device to transmit the UWB signal. FIG. 14 shows that a responder needs to send a UWB signal in a time unit 0, a time unit 2, a time unit 4, and a time unit 8. It can be learned from FIG. 14 that an unnecessary indication of the first four time units is moved to the bitmap offset field of the list element in the scheduling list field. Therefore, an actual scheduling indication may be completed by 8 bits, that is, in this case, only 1 byte is required for scheduling bitmap, and the 2 bytes in FIG. 13 are not required, thereby reducing message overheads.

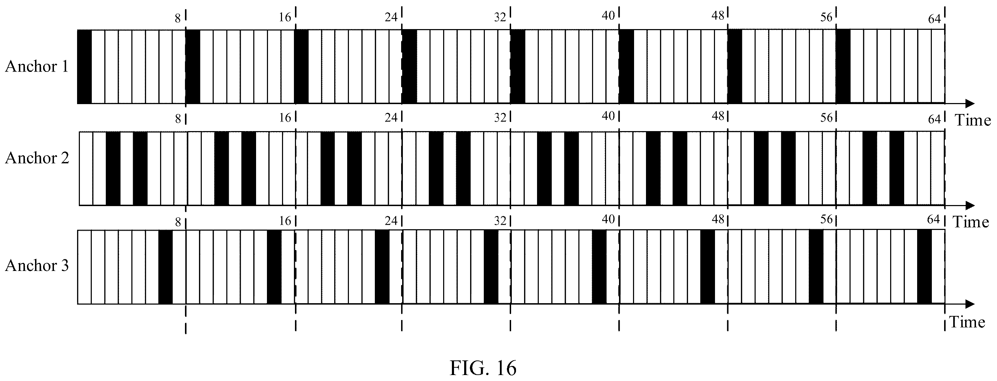

FIG. 15 is a group of typical scheduling modes in which a DL-TDOA positioning process can be completed. In this group of scheduling modes, three anchor devices (anchor), namely, an anchor 1, an anchor 2, and an anchor 3 in FIG. 15, transmit UWB signals in the scheduling manner shown in FIG. 15 to perform DL-TDOA positioning. It is assumed that the DL-TDOA scheduling mode shown in FIG. 15 needs to be repeated for eight times, and there is no interval between two adjacent DL-TDOA positioning processes. In this case, a scheduling case is shown in FIG. 16. FIG. 16 is a diagram of scheduling of DL-TDOA positioning that is repeated for eight times according to an embodiment of this application. In FIG. 15 and FIG. 16, each rectangle indicates one time unit, a time unit indicated by a gray rectangle is scheduled and allocated to transmit the UWB signal, and a time unit indicated by a white rectangle is not scheduled and allocated to transmit the UWB signal. Because one complete DL-TDOA process is completed in 8 time units, there is no interval between two adjacent DL-TDOA processes shown in FIG. 16.

For the scheduling case shown in FIG. 16, that period mode is equal to 1 needs to be enabled in this case, so that a period index field and a repetition index field can be used to effectively compress signaling overheads of the scheduling information in the case shown in FIG. 16. It is assumed that the period index field may indicate a period value like 0, 1, 4, 8, 16, or 32 time units, and the repetition index field may indicate 1 to 16 repetitions. In this case, the period index field is set to 0 (indicating that there is no interval between two adjacent times of DL-TDOA measurement, and next measurement starts immediately after previous measurement is completed), and the repetition index field is set to 7 (indicating eight repetitions since a subscript starts from 0), so that a scheduling indication of the case in FIG. 16 can be implemented. It is assumed that the period index field may indicate a period value like 0, 1, 4, 8, 16, or 32 time units, and the repetition index field may indicate 1 to 16 repetitions. In this case, the period index field is set to 8 (indicating that a scheduling period is 8 time units), and the repetition index field is set to 7 (indicating eight repetitions since a subscript starts from 0), so that a scheduling indication of the case in FIG. 16 can be implemented.

Correspondingly, it can be learned from FIG. 16 that S is equal to 64 and N is equal to 3. Therefore, in the case shown in FIG. 16, comparison between signaling consumption of scheduling information is shown in Table 17 below.

Table 17

| | Short address device (unit: byte) | Extended address device (unit: byte) |
|---|---|---|
| Message size of an | 1 + 3 * 64 * 3 = 577 | 1 + 9 * 64 * 3 = 1729 |
| RDM IE in the conventional technology 1 | | |
| Message size of a bitmap-based IE in the conventional technology 2 | 1+11*3=34 | 1+17*3=52 |
| Message size of scheduling information in this application | 1+5*3=16 | 1+11*3=34 |

The scheduling information in this application in Table 17 may be the scheduling information including the scheduling list field in Example 2 and the control field in Example 4. It can be learned from Table 17 that, compared with those in the conventional technology 1 and the conventional technology 2, the scheduling information provided in this application can significantly reduce message size overheads.

It should be noted that the scheduling information (referred to as a newly designed scheduling IE below) provided in embodiments of this application may be identified and processed by a device (anchor or tag) that needs to perform a ranging or sensing function. In a possible implementation, a corresponding method for identifying and processing the newly designed scheduling IE is similar to a method for identifying and processing a nested IE (for example, an RDM IE) stipulated in the existing protocol 802.15.4z. For details, refer to the method for identifying and processing the nested IE in the existing protocol 802.15.4z. For example, a protocol upper layer of a transmit end device configures a scheduling IE, and transfers the scheduling IE to a medium access control (medium access control, MAC) layer of the transmit end device. For another example, a MAC layer of a receive end device transfers a received scheduling IE to a upper protocol layer of the receive end device, and the protocol upper layer performs identification processing on the scheduling IE.

In a possible implementation, the newly designed scheduling IE may be transferred on a narrow-band frequency band.

In another possible implementation, the newly designed scheduling IE may alternatively be transferred on a UWB frequency band.

For ease of understanding, the following describes the newly designed scheduling IE in detail with reference to Table 18.

Table 18 below is an expansion and extension of Table 7 to Table 18 (Table 7 to Table 18) in the existing 802.15.4z protocol. For brevity, an existing definition in Table 7 to Table 18 in the protocol is not reflected in Table 18 below. Specifically, it can be seen from Table 18 below that the newly designed scheduling IE may be added to a nested IE list defined in Table 7 to Table 18 (Table 7 to Table 18) in the existing 802.15.4z protocol, and used as a newly added IE in the 802.15.4ab protocol or a later version protocol. Specifically, a reserved sub-ID value (Sub-ID value) in the nested IE list defined in Table 7 to Table 18 (Table 7 to Table 18) in the existing 802.15.4z protocol may indicate the newly designed scheduling IE.

Table 18

| Sub-ID value | IE Name | Data | Used by | Created by |
|---|---|---|---|---|
| T | (Newly added scheduling IE) | X | Upper Layer | Upper Layer |

T in Table 18 may be any one or more values in 0x5d to 0x7f. Table 18 shows an expansion and extension of the nested IE list defined in Table 7 to Table 18 (Table 7 to Table 18) in the existing 802.15.4z protocol. X in Table 18 indicates that the newly designed scheduling IE is an IE of a data type.

The following describes, with reference to the accompanying drawings, structures of communication apparatuses that can implement the scheduling methods provided in embodiments of this application.

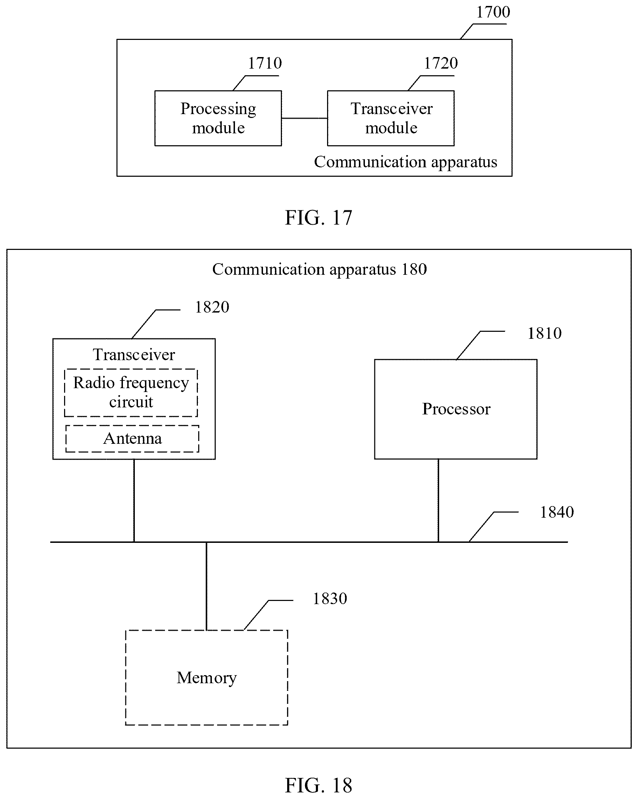

FIG. 17 is a diagram of a structure of a communication apparatus 1700 according to an embodiment of this application. The communication apparatus 1700 may correspondingly implement functions or steps implemented by the transmit end in the foregoing method embodiments, or may correspondingly implement functions or steps implemented by the receive end in the foregoing method embodiments. The communication apparatus may include a processing module 1710 and a transceiver module 1720. In a possible implementation, the apparatus may further include a storage unit. The storage unit may be configured to store instructions (code or a program) and/or data. The processing module 1710 and the transceiver module 1720 may be coupled to the storage unit. For example, the processing module 1710 may read the instructions (code or program) and/or the data in the storage unit, to implement a corresponding method. The foregoing units may be independently disposed, or may be partially or completely integrated. For example, the transceiver module 1720 may include a sending module and a receiving module. The sending module may be a transmitter, and the receiving module may be a receiver. An entity corresponding to the transceiver module 1720 may be a transceiver, or may be a communication interface.

In some possible implementations, the communication apparatus 1700 can correspondingly implement behavior and functions of the transmit end in the foregoing method embodiments. For example, the communication apparatus 1700 may be the transmit end, or may be a component (for example, a chip or a circuit) used in the transmit end. The transceiver module 1720 may be configured to perform, for example, all receiving or sending operations performed by the transmit end in the embodiments in FIG. 6 and FIG. 7, for example, step 602 in the embodiment shown in FIG. 6, and step 701 and step 702 in the embodiment shown in FIG. 7, and/or is configured to support another process of the technology described in this specification. The processing module 1710 is configured to perform all operations, other than the sending and receiving operations, performed by the transmit end in the embodiments in FIG. 6 and FIG. 7, for example, step 601 in the embodiment shown in FIG. 6.

In some possible implementations, the communication apparatus 1700 can correspondingly implement behavior and functions of the receive end in the foregoing method embodiments. For example, the communication apparatus 1700 may be the receive end, or may be a component (for example, a chip or a circuit) used in the receive end. The transceiver module 1720 may be configured to perform, for example, all receiving or sending operations performed by the receive end in the embodiments in FIG. 6 and FIG. 7, for example, step 602 in the embodiment shown in FIG. 6, and step 701 and step 702 in the embodiment shown in FIG. 7, and/or is configured to support another process of the technology described in this specification. The processing module 1710 is configured to perform all operations, other than the sending and receiving operations, performed by the receive end, for example, step 603 in the embodiment shown in FIG. 6, and step 703 in the embodiment shown in FIG. 7.

FIG. 18 is a diagram of a structure of another communication apparatus 180 according to an embodiment of this application. The communication apparatus in FIG. 18 may be the transmit end, or may be the receive end.

As shown in FIG. 18, the communication apparatus 180 includes at least one processor 1810 and a transceiver 1820.

In some embodiments of this application, the processor 1810 and the transceiver 1820 may be configured to perform functions, operations, or the like performed by the transmit end. The transceiver 1820 performs, for example, all receiving or sending operations performed by the transmit end in the embodiments in FIG. 6 and FIG. 7. The processor 1810 is configured to perform, for example, all operations other than the sending and receiving operations performed by the transmit end in the embodiments in FIG. 6 and FIG. 7.

In some embodiments of this application, the processor 1810 and the transceiver 1820 may be configured to perform functions, operations, or the like performed by the receive end. The transceiver 1820 performs, for example, all receiving or sending operations performed by the receive end in the embodiments in FIG. 6 and FIG. 7. The processor 1810 is configured to perform all operations other than the sending and receiving operations performed by the receive end.

The transceiver 1820 is configured to communicate with another device/apparatus through a transmission medium. The processor 1810 receives and sends data and/or signaling via the transceiver 1820, and is configured to implement the method in the foregoing method embodiments. The processor 1810 may implement functions of the processing module 1710, and the transceiver 1820 may implement functions of the transceiver module 1720.

For example, the transceiver 1820 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. An input/output apparatus like a touchscreen, a display, or a keyboard is mainly configured to: receive data input by a user and output data to the user.

The communication apparatus 180 may further include at least one memory 1830, configured to store program instructions and/or data. The memory 1830 is coupled to the processor 1810. The coupling in this embodiment of this application may be an indirect coupling or a communication connection between apparatuses, units, or modules in an electrical form, a mechanical form, or another form, and is used for information exchange between the apparatuses, the units, or the modules. The processor 1810 may cooperate with the memory 1830. The processor 1810 may execute the program instructions stored in the memory 1830. At least one of the at least one memory may be included in the processor.

The processor 1810 may read a software program in the memory 1830, interpret and execute instructions of the software program, and process data of the software program. When data needs to be sent wirelessly, the processor 1810 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1810. The processor 1810 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In this embodiment of this application, a specific connection medium between the transceiver 1820, the processor 1810, and the memory 1830 is not limited. In this embodiment of this application, in FIG. 18, the memory 1830, the processor 1810, and the transceiver 1820 are connected to each other through a bus 1840. The bus is indicated by a thick line in FIG. 18. A manner of connection between other components is only schematically described, but is not used as a limitation. The bus may be classified into an address bus, a data bus, a control bus, and the like. For ease of indication, the bus is indicated by only one thick line in FIG. 18, but this does not indicate that there is only one bus or one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

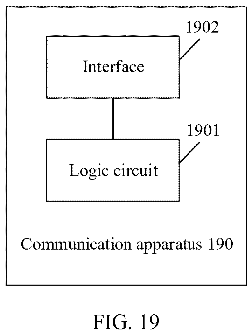

FIG. 19 is a diagram of a structure of another communication apparatus 190 according to an embodiment of this application. As shown in FIG. 19, the communication apparatus shown in FIG. 19 includes a logic circuit 1901 and an interface 1902. The processing module 1710 in FIG. 17 may be implemented by using the logic circuit 1901, and the transceiver module 1720 in FIG. 17 may be implemented by using the interface 1902. The logic circuit 1901 may be a chip, a processing circuit, an integrated circuit, a system on chip (system on chip, SoC), or the like. The interface 1902 may be a communication interface, an input/output interface, or the like. In this embodiment of this application, the logic circuit and the interface may be coupled to each other. A specific manner of connection between the logical circuit and the interface is not limited in this embodiment of this application.

In some embodiments of this application, the logic circuit and the interface may be configured to perform functions, operations, or the like performed by the transmit end.

In some embodiments of this application, the logic circuit and the interface may be configured to perform functions, operations, or the like performed by the receive end.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the method in the foregoing embodiments is performed.

This application further provides a communication system, including the transmit end and the receive end.

This application further provides a chip. The chip includes a communication interface and a processor. The communication interface is configured to receive and send a signal of the chip. The processor is configured to execute computer program instructions, so that a communication apparatus including the chip performs the method in the foregoing embodiments.

All or some of the foregoing embodiments may be implemented by software, hardware, firmware, or any combination thereof. When software is used to implement embodiments, all or some embodiments may be implemented in a form of a computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include both the volatile storage medium and the non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

**Claims**

1. A scheduling method for an ultra-wideband UWB, comprising:

generating scheduling information, wherein the scheduling information comprises a time unit bitmap and a bitmap offset, the time unit bitmap indicates whether a time unit is used by a UWB device to transmit a UWB signal, the bitmap offset is used to determine a start time unit in which the UWB device transmits the UWB signal, and a time unit corresponding to a 1st bit of the time unit bitmap is the start time unit; and
sending the scheduling information.

2. The method according to claim 1, wherein a value of the bitmap offset is a quantity of time units before the start time unit in one measurement period.

3. The method according to claim 2, wherein the time unit bitmap comprises K bits, K is an integer greater than 0, and when one of the K bits is set to a specified value, the specified value indicates that a time unit corresponding to the bit is used by the UWB device to transmit the UWB signal.

4. The method according to claim 2 or 3, wherein the measurement period is a ranging period.

5. The method according to any one of claims 1 to 4, wherein the time unit bitmap is a time unit bitmap corresponding to some time units in one measurement period, and the scheduling information further comprises a field indicating a scheduling period in which the UWB device transmits the UWB signal.

6. The method according to claim 5, wherein the scheduling information further comprises a field indicating a quantity of repetitions of transmitting the UWB signal by the UWB device.

7. The method according to claim 5 or 6, wherein the scheduling information further comprises a field indicating the UWB device to periodically transmit the UWB signal.

8. The method according to any one of claims 1 to 7, wherein the scheduling information further comprises a field indicating a length of the time unit bitmap.

9. The method according to any one of claims 1 to 8, wherein the scheduling information further comprises an address of the UWB device, and a length of the address of the UWB device is 2 bytes or 8 bytes.

10. The method according to any one of claims 1 to 9, wherein the time unit is either a slot or a ranging scheduling time unit RSTU.

11. The method according to any one of claims 1 to 10, wherein the method is applied to a ranging, sensing, or positioning scenario.

12. A scheduling method for a UWB, comprising:

receiving first scheduling information, wherein the first scheduling information comprises a time unit bitmap and a bitmap offset, the time unit bitmap indicates whether a time unit is used by a UWB device to transmit a UWB signal, the bitmap offset is used to determine a start time unit in which the UWB device transmits the UWB signal, and a time unit corresponding to a 1st bit of the time unit bitmap is the start time unit; and
transmitting the UWB signal based on the first scheduling information.

13. The method according to claim 12, wherein a value of the bitmap offset is a quantity of time units before the start time unit in one measurement period.

14. The method according to claim 13, wherein the time unit bitmap comprises K bits, K is an integer greater than 0, and when one of the K bits is set to a specified value, the specified value indicates that a time unit corresponding to the bit is used by the UWB device to transmit the UWB signal.

15. The method according to claim 13 or 14, wherein the measurement period is a ranging period.

16. The method according to any one of claims 12 to 15, wherein the time unit bitmap is a time unit bitmap corresponding to some time units in one measurement period, and the first scheduling information further comprises a field indicating a scheduling period in which the UWB device transmits the UWB signal.

17. The method according to claim 16, wherein the first scheduling information further comprises a field indicating a quantity of repetitions of transmitting the UWB signal by the UWB device.

18. The method according to claim 16 or 17, wherein the first scheduling information further comprises a field indicating the UWB device to periodically transmit the UWB signal.

19. The method according to any one of claims 12 to 18, wherein the first scheduling information further comprises a field indicating a length of the time unit bitmap.

20. The method according to any one of claims 12 to 19, wherein the first scheduling information further comprises an address of the UWB device, and a length of the address of the UWB device is 2 bytes or 8 bytes.

21. The method according to any one of claims 12 to 20, wherein the time unit is either a slot or a ranging scheduling time unit RSTU.

22. The method according to any one of claims 12 to 21, wherein the method is applied to a ranging, sensing, or positioning scenario.

23. The method according to any one of claims 12 to 22, wherein the method further comprises:

    receiving second scheduling information, wherein a format of the second scheduling information is different from a format of the first scheduling information; and
    the transmitting the UWB signal based on the first scheduling information comprises:
    transmitting the UWB signal based on a sequence of receiving the first scheduling information and the second scheduling information, and the first scheduling information.

24. A communication apparatus, comprising a module or a unit configured to implement the method according to any one of claims 1 to 11.

25. A communication apparatus, comprising a module or a unit configured to implement the method according to any one of claims 12 to 23.

26. A computer-readable storage medium, wherein the computer-readable storage medium stores a computer program, the computer program comprises program instructions, and when the program instructions are executed, a computer is enabled to perform the method according to any one of claims 1 to 23.

27. A communication apparatus, comprising a processor, wherein the processor is coupled to a memory, the memory stores computer program instructions, and the processor is configured to execute the computer program instructions, so that the communication apparatus performs the method according to any one of claims 1 to 23.

28. A chip, comprising:

    a communication interface, configured to: receive and send a signal of the chip; and
    a processor, configured to execute computer program instructions, so that a communication apparatus comprising the chip performs the method according to any one of claims 1 to 23.

EP 4 598 203 A1

Ranging round

Ranging
slot

...

...

...

Ranging control phase

Ranging phase

Measurement report phase

FIG. 1

→ **UWB positioning/ranging signal**

FIG. 2

**PAN coordinator or coordinator**

FIG. 3

**PAN coordinator or coordinator**

Information flow

FFD

RFD

FIG. 4

Anchor

Tag 1                    Tag 2

FIG. 5

Transmit end                    Receive end

601

Generate scheduling information
(bitmap offset and time unit bitmap)

Scheduling information    602

603

Transmit a UWB signal based on the
scheduling information

FIG. 6

First transmit end | Second transmit end | Receive end

First scheduling information 701

Second scheduling information 702

703

Transmit a UWB signal based on a sequence of receiving the first scheduling information and the second scheduling information, and the first scheduling information

FIG. 7

Controller device

Scheduling information

Time

Initiator

Time

Responder 1

Time

Responder 2

Time

| Ranging control phase | Ranging phase | Report phase |

FIG. 8

| List element: | Bitmap offset | Time unit bitmap | Address 1 |

FIG. 9

FIG. 10

FIG. 11

| List element: | Bitmap offset | Time unit bitmap | Address 1 | Period index field | Repetition index field |
|---|---|---|---|---|---|

FIG. 12

FIG. 13

0 1 2 3 4 5 6 7

Time

FIG. 14

8

Anchor 1

Time

8

Anchor 2

Time

8

Anchor 3

Time

FIG. 15

FIG. 16

1700

1710                         1720

| Processing module | | Transceiver module |

Communication apparatus

FIG. 17

Communication apparatus 180

1820

Transceiver

Radio frequency circuit

Antenna

1810

Processor

1840

1830

Memory

FIG. 18

1902

Interface

1901

Logic circuit

Communication apparatus 190

FIG. 19

# INTERNATIONAL SEARCH REPORT

International application No.

**PCT/CN2023/119097**

### A. CLASSIFICATION OF SUBJECT MATTER

H04W 72/1263(2023.01)i

According to International Patent Classification (IPC) or to both national classification and IPC

### B. FIELDS SEARCHED

Minimum documentation searched (classification system followed by classification symbols)

IPC:H04W72/-

Documentation searched other than minimum documentation to the extent that such documents are included in the fields searched

Electronic data base consulted during the international search (name of data base and, where practicable, search terms used)

CNABS; CNTXT; CNKI: 超宽带, UWB, 调度, 位图, 偏移, 偏置, 传输; VEN; EPTXT; WOTXT; USTXT; IEEE; 3GPP: UWB, bitmap+, excurs+, offset, transmit+

### C. DOCUMENTS CONSIDERED TO BE RELEVANT

| Category* | Citation of document, with indication, where appropriate, of the relevant passages | Relevant to claim No. |
|---|---|---|
| X | CN 114342486 A (BEIJING XIAOMI MOBILE SOFTWARE CO., LTD.) 12 April 2022 (2022-04-12) <br> description, paragraphs [0036]-[0209] | 1-28 |
| A | CN 112913313 A (SAMSUNG ELECTRONICS CO., LTD.) 04 June 2021 (2021-06-04) <br> entire document | 1-28 |
| A | CN 115002907 A (HUAWEI TECHNOLOGIES CO., LTD.) 02 September 2022 (2022-09-02) <br> entire document | 1-28 |
| A | CN 113660692 A (VIVO COMMUNICATION TECHNOLOGY CO., LTD.) 16 November 2021 (2021-11-16) <br> entire document | 1-28 |
| A | KR 20150058601 A (MOKPO NATIONAL UNIVERSITY INDUSTRY-ACADEMIA COOPERATION GROUP) 29 May 2015 (2015-05-29) <br> entire document | 1-28 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2023** | **12 December 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119097**

| Patent document cited in search report | | | Publication date (day/month/year) | Patent family member(s) | | | Publication date (day/month/year) |
|---|---|---|---|---|---|---|---|
| CN | 114342486 | A | 12 April 2022 | WO | 2022000421 | A1 | 06 January 2022 |
| | | | | IN | 202347002303 | A | 20 January 2023 |
| | | | | EP | 4178271 | A1 | 10 May 2023 |
| | | | | EP | 4178271 | A4 | 09 August 2023 |
| CN | 112913313 | A | 04 June 2021 | WO | 2020085876 | A1 | 30 April 2020 |
| | | | | US | 2020137676 | A1 | 30 April 2020 |
| | | | | US | 11153810 | B2 | 19 October 2021 |
| | | | | KR | 20200047271 | A | 07 May 2020 |
| | | | | EP | 3845025 | A1 | 07 July 2021 |
| | | | | EP | 3845025 | A4 | 22 December 2021 |
| CN | 115002907 | A | 02 September 2022 | CN | 111867118 | A | 30 October 2020 |
| | | | | CA | 3135598 | A1 | 05 November 2020 |
| | | | | WO | 2020221326 | A1 | 05 November 2020 |
| | | | | US | 2022053523 | A1 | 17 February 2022 |
| | | | | EP | 3965511 | A1 | 09 March 2022 |
| | | | | CN | 111867118 | B | 26 April 2022 |
| | | | | EP | 3965511 | A4 | 06 July 2022 |
| CN | 113660692 | A | 16 November 2021 | WO | 2021228077 | A1 | 18 November 2021 |
| | | | | IN | 202227067858A | A | 06 January 2023 |
| | | | | KR | 20230008861 | A | 16 January 2023 |
| | | | | US | 2023062421A1 | A1 | 02 March 2023 |
| | | | | EP | 4152870 | A1 | 22 March 2023 |
| | | | | JP | 2023525145 | W | 14 June 2023 |
| KR | 20150058601 | A | 29 May 2015 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211275258